(19) Europäisches Patentamt
European Patent Office
Office européen des brevets

(11) **EP 4 618 467 A1**

(12) **EUROPEAN PATENT APPLICATION**
published in accordance with Art. 153(4) EPC

(43) Date of publication:
**17.09.2025 Bulletin 2025/38**

(21) Application number: **22965460.3**

(22) Date of filing: **16.11.2022**

(51) International Patent Classification (IPC):
***H04L 7/08*** *(2006.01)* ***H04W 56/00*** *(2009.01)*
***G01S 5/02*** *(2010.01)*

(52) Cooperative Patent Classification (CPC):
**G01S 5/02; H04L 7/08; H04W 56/00**

(86) International application number:
**PCT/CN2022/132119**

(87) International publication number:
**WO 2024/103269 (23.05.2024 Gazette 2024/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **DENG, Tao**
  **Shenzhen, Guangdong 518129 (CN)**
- **LUO, Jiajin**
  **Shenzhen, Guangdong 518129 (CN)**
- **DU, Rui**
  **Shenzhen, Guangdong 518129 (CN)**
- **ZHOU, Baojian**
  **Shenzhen, Guangdong 518129 (CN)**

(74) Representative: **Maiwald GmbH**
**Engineering**
**Elisenhof**
**Elisenstrasse 3**
**80335 München (DE)**

(54) **TIME SYNCHRONIZATION METHOD AND APPARATUS**

(57) This application provides a time synchronization method and an apparatus. A first device sends a second multi-carrier signal to a second device, and sends first information to the second device to indicate a phase locally determined by the first device through analysis. The second device receives the second multi-carrier signal, and locally determines the phase through analysis. In this way, the second device may determine, based on the second multi-carrier signal and the first information, a two-site phase difference and a frequency difference corresponding to the second multi-carrier signal, to adjust a local clock, so that the first device and the second device are time-synchronized, thereby improving precision of time synchronization between devices with low costs.

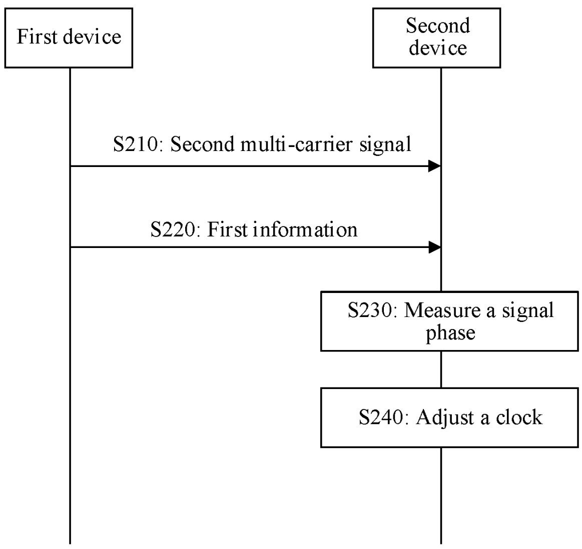


FIG. 4

EP 4 618 467 A1

## Description

### TECHNICAL FIELD

This application relates to the communication field, and specifically, to a time synchronization method and apparatus in the communication field.

### BACKGROUND

A high-precision time synchronization technology is a key basic technology in many application scenarios. For example, in the communication field, during coordination involving multiple stations, time asynchronization between the multiple stations may cause location uncertainty. In addition, in a current sensing scenario, time asynchronization between receiving and sending causes a quite large random phase noise to be introduced into collected data, affecting a sensing effect. In conclusion, low time synchronization precision severely restricts improvement of sensing performance and limits an application scenario range of device collaboration.

Currently, mainstream time synchronization methods of a civil communication base station are a time provision technology based on a global navigation satellite system (Global Navigation Satellite System, GNSS for short) and a time provision technology based on an institute of electrical and electronics engineers (Institute of Electrical and Electronics Engineers, IEEE for short) 1588v2 protocol. The two mainstream time synchronization methods have low time provision precision in some application scenarios. Clock tame technology based on local high-stability atomic clocks can achieve quite high precision, but high-stability atomic clocks are expensive. In addition, other existing time synchronization methods cannot achieve effects of high precision and low costs of time synchronization at the same time.

### SUMMARY

Based on the foregoing problem, this application provides a time synchronization method, so that both high-precision and low-cost effects of time synchronization can be implemented based on interference measurement.

According to a first aspect, a time synchronization method is provided. The method is applied to a second apparatus, so that a first apparatus and the second apparatus implement time synchronization. The method includes the following steps: The second apparatus detects a first multi-carrier signal, where the first multi-carrier signal includes at least two subcarriers $f_1$, $f_2$, and the two subcarriers respectively correspond to discrete frequencies in a spectrum. The second apparatus determines a first phase $\Phi'_1$ corresponding to the subcarrier $f_1$ and a second phase $\Phi'_2$ corresponding to the subcarrier $f_2$ included in the first multi-carrier signal, where the first multi-carrier signal is a second multi-carrier signal that is sent by the first apparatus and propagated between channels. The second apparatus receives first information, where the first information indicates a third phase and a fourth phase that correspond to the second multi-carrier signal, the third phase $\Phi_1$ corresponds to the subcarrier signal $f_1$, and the fourth phase $\Phi_2$ corresponds to the subcarrier $f_2$. The second apparatus performs time synchronization with the first apparatus based on a first phase difference, a second phase difference, and a first frequency difference, where the first phase difference is a phase difference between the first phase and the third phase, that is, $\Delta\Phi_1 = \Phi'_1 - \Phi_1$, the second phase difference is a phase difference between the second phase and the fourth phase, that is, $\Delta\Phi_2 = \Phi'_2 - \Phi_2$, the first frequency difference is a frequency difference corresponding to the first multi-carrier signal, and a frequency difference corresponding to the subcarriers $f_1$, $f_2$ included in the first multi-carrier signal is $\Delta f = f_2 - f_1$.

The second apparatus adjusts a clock of the second apparatus based on the locally obtained phases corresponding to the first multi-carrier signal, the locally obtained phases corresponding to the second multi-carrier signal, and the frequency difference of the first multi-carrier signal, so that the second apparatus and the first apparatus are time-synchronized. This can implement high-precision time synchronization between apparatuses, and avoid using an expensive high-stability atomic clock, thereby reducing costs.

In some possible implementations, the second apparatus may use the first phase difference $\Delta\Phi_1$, the second phase difference $\Delta\Phi_2$, and the first frequency difference $\Delta f$ as inputs by using an empirical formula, a neural network model, a transfer function, a convolution formula, or the like, to output an adjustment amount or a clock difference to adjust a local clock of the second apparatus, so that the first apparatus and the second apparatus are time-synchronized.

In some possible implementations, the second apparatus determines a first adjustment amount based on the first phase difference $\Delta\Phi_1$, the second phase difference $\Delta\Phi_2$, and the first frequency difference $\Delta f$, where the first adjustment amount is used for time synchronization between the first apparatus and the second apparatus, and the first adjustment amount $\Delta\tau$ meets the following condition: $\Delta\tau = \frac{\Delta\Phi_1 - \Delta\Phi_2}{2\pi\Delta f}$, where $\Delta\Phi_1$ represents the first phase difference, $\Delta\Phi_2$ represents the second phase difference, and $\Delta f$ represents the first frequency difference. The first adjustment amount is calculated by using an interference measurement method, so that time synchronization between the first apparatus and

the second apparatus with high precision, low costs, and low process complexity can be further implemented.

In some possible implementations, when the second apparatus performs time synchronization with the first apparatus based on the first phase difference $\Delta\Phi_1$, the second phase difference $\Delta\Phi_2$, and the first frequency difference $\Delta f$, a first delay amount needs to be considered. The first delay amount is associated with a geometric distance between the first apparatus and the second apparatus, and the geometric distance may be a distance in which a signal is propagated between the first apparatus and the second apparatus. The first delay amount may be a geometric delay amount $\Delta\tau_{g_12}$. Further, based on the geometric distance between the first apparatus and the second apparatus, an operation speed is increased when an output amount or a clock difference used for the second apparatus is calculated by using an empirical formula, a neural network model, a transfer function, a convolution formula, or the like.

In some possible implementations, the second apparatus determines a first adjustment amount based on the first phase difference $\Delta\Phi_1$, the second phase difference $\Delta\Phi_2$, and the first frequency difference $\Delta f$, where the first adjustment amount is used for time synchronization between the first apparatus and the second apparatus, and the first adjustment amount $\Delta\tau$ meets the following condition: $\Delta\tau = \frac{\Delta\Phi_1 - \Delta\Phi_2}{2\pi\Delta f} - \Delta\tau_{g_12}$, where $\Delta\Phi_1$ represents the first phase difference, $\Delta\Phi_2$ represents the second phase difference, $\Delta f$ represents the first frequency difference, and $\Delta\tau_{g_12}$ represents the first delay amount. The first adjustment amount is calculated by using an interference measurement method, and a known geometric delay amount is directly deducted, so that time synchronization between the first apparatus and the second apparatus with high precision, low costs, and low process complexity can be further implemented.

With reference to an implementation of the first aspect, when the geometric distance between the first apparatus and the second apparatus is unknown, this application provides a two-way measurement method, to further eliminate the first delay amount $\Delta\tau_{g_12}$ associated with the geometric distance. The method requires clock adjustment on a first apparatus side and a second apparatus side. The method includes: The second apparatus sends a third multi-carrier signal, where the third multi-carrier signal includes at least two subcarriers $f_{21}$, $f_{22}$, and the two subcarriers respectively correspond to discrete frequencies in a spectrum. The second apparatus determines a fifth phase $\Phi'_{21}$ corresponding to the subcarrier $f_{21}$ and a sixth phase $\Phi'_{22}$ corresponding to the subcarrier $f_2$ included in the third multi-carrier signal. The second apparatus sends second information, where the second information indicates the fifth phase $\Phi'_{21}$ and the sixth phase $\Phi'_{22}$ corresponding to the third multi-carrier signal, and the third multi-carrier signal and the second information are used by the first apparatus to adjust a local clock. The second apparatus detects a fourth multi-carrier signal, where the fourth multi-carrier signal includes at least two subcarriers $f_{31}$, $f_{32}$, and the two subcarriers respectively correspond to discrete frequencies in a spectrum. The second apparatus determines a seventh phase $\Phi'_{31}$ corresponding to the subcarrier $f_{31}$ and an eighth phase $\Phi'_{32}$ corresponding to the subcarrier $f_{32}$ included in the fourth multi-carrier signal, where the fourth multi-carrier signal is a fifth multi-carrier signal that is sent by the first apparatus and propagated between channels. The second apparatus receives third information, where the third information indicates a ninth phase and a tenth phase that correspond to the fifth multi-carrier signal, the ninth phase $\Phi_{31}$ corresponds to the subcarrier signal $f_{31}$, and the tenth phase $\Phi_{32}$ corresponds to the subcarrier $f_{32}$. The second apparatus adjusts a local clock based on a third phase difference, a fourth phase difference, and a second frequency difference, where the third phase difference is a phase difference between the seventh phase and the ninth phase, that is, $\Delta\Phi_{31} = \Phi'_{31} - \Phi_{31}$, the fourth phase difference is a phase difference between the eighth phase and the tenth phase, that is, $\Delta\Phi_{32} = \Phi'_{32} - \Phi_{31}$, the second frequency difference is a frequency difference corresponding to the fourth multi-carrier signal, and a frequency difference corresponding to the subcarriers $f_{32}$, $f_{31}$ included in the fourth multi-carrier signal is $\Delta''f = f_{32} - f_{31}$. A method in which the second apparatus adjusts the local clock may be as follows: The second apparatus obtains a third adjustment amount $\Delta\tau'_{12}$ based on the third phase difference $\Delta\Phi_{31}$, the fourth phase difference $\Delta\Phi_{32}$, and the second frequency difference $\Delta''f$, to adjust the local clock, for example, may adjust the local clock to $t_{clk2} + \frac{\Delta\tau'_{12}}{2} - \Delta\tau_{12}$.

In this manner, a geometric delay $\Delta\tau_{g_12}$ corresponding to a two-site distance between the first apparatus and the second apparatus may be eliminated, so as to implement time synchronization between the first apparatus and the second apparatus with high precision, low costs, and low complexity.

With reference to an implementation of the first aspect, when the geometric distance between the first apparatus and the second apparatus is unknown, this application provides a two-way measurement method, to further eliminate the first delay amount $\Delta\tau_{g_12}$ associated with the geometric distance. The method requires clock adjustment on a second apparatus side. The method includes: The second apparatus sends a third multi-carrier signal, where the third multi-carrier signal includes at least two subcarriers $f_{21}$, $f_{22}$, and the two subcarriers respectively correspond to discrete frequencies in a spectrum. The second apparatus determines a fifth phase $\Phi'_{21}$ corresponding to the subcarrier $f_{21}$ and a sixth phase $\Phi'_{22}$ corresponding to the subcarrier $f_{22}$ included in the third multi-carrier signal. The second apparatus sends second information, where the second information indicates the fifth phase $\Phi'_{21}$ and the sixth phase $\Phi'_{22}$ corresponding to the third multi-carrier signal, and the third multi-carrier signal and the second information are used by the first apparatus to adjust a local clock. The second apparatus detects a fourth multi-carrier signal, where the fourth multi-carrier signal

includes at least two subcarriers $f_{31}$ $f_{32}$, and the two subcarriers respectively correspond to discrete frequencies in a spectrum. The second apparatus determines a seventh phase $\Phi'_{31}$ corresponding to the subcarrier $f_{31}$ and an eighth phase $\Phi'_{32}$ corresponding to the subcarrier $f_{32}$ included in the fourth multi-carrier signal, where the fourth multi-carrier signal is a fifth multi-carrier signal that is sent by the first apparatus and propagated between channels. The second apparatus receives third information, where the third information indicates a ninth phase and a tenth phase that correspond to the fifth multi-carrier signal, the ninth phase $\Phi_{31}$ corresponds to the subcarrier signal $f_{31}$, and the tenth phase $\Phi_{32}$ corresponds to the subcarrier $f_{32}$. The second apparatus determines a third adjustment amount $\Delta\tau'_{12}$ based on a third phase difference, a fourth phase difference, and a second frequency difference, where the third phase difference is a phase difference between the seventh phase and the ninth phase, that is, $\Delta\Phi_{31} = \Phi'_{31} - \Phi_{31}$, the fourth phase difference is a phase difference between the eighth phase and the tenth phase, that is, $\Delta\Phi_{32} = \Phi'_{32} - \Phi_{31}$, the second frequency difference is a frequency difference corresponding to the fourth multi-carrier signal, and a frequency difference corresponding to the subcarriers $f_{32}$, $f_{31}$ included in the fourth multi-carrier signal is $\Delta''f = f_{32} - f_{31}$. The second apparatus receives fourth information, where the fourth information indicates a second adjustment amount $\Delta\tau_{21}$. The second apparatus adjusts a local clock based on the second adjustment amount and the third adjustment amount $\Delta\tau'_{12}$, for example, may adjust the local clock to $t_{clk2} - (\Delta\tau_{12} - \frac{\Delta\tau'_{12} + \Delta\tau_{21}}{2}$. In this manner, a geometric delay $\Delta\tau_{g_12}$ corresponding to a two-site distance between the first apparatus and the second apparatus may be eliminated, so as to implement time synchronization between the first apparatus and the second apparatus with high precision, low costs, and low complexity.

According to a second aspect, a time synchronization method is provided. The method requires a first apparatus, so that the first apparatus and a second apparatus implement time synchronization. The method includes the following steps: The first apparatus sends a second multi-carrier signal, where the second multi-carrier signal includes at least two subcarriers $f_1$, $f_2$, and the two subcarriers respectively correspond to discrete frequencies in a spectrum. The first apparatus determines a third phase $\Phi_1$ corresponding to the subcarrier $f_1$ and a fourth phase $\Phi_2$ corresponding to the subcarrier $f_2$ included in the second multi-carrier signal. The first apparatus sends first information, where the first information indicates the third phase $\Phi_1$ and the fourth phase $\Phi_2$ corresponding to the second multi-carrier signal, and the second multi-carrier signal and the first information are used by the second apparatus to adjust a local clock.

The second apparatus adjusts a clock of the second apparatus based on locally obtained phases corresponding to a first multi-carrier signal, the locally obtained phases corresponding to the second multi-carrier signal, and a frequency difference of the first multi-carrier signal, so that the second apparatus and the first apparatus are time-synchronized. This can implement high-precision time synchronization between apparatuses, and avoid using an expensive high-stability atomic clock, thereby reducing costs.

With reference to an implementation of the second aspect, when a geometric distance between the first apparatus and the second apparatus is unknown, this application provides a two-way measurement method, to further eliminate a first delay amount $\Delta\tau_{g_12}$ associated with the geometric distance. The method requires clock adjustment on a first apparatus side and a second apparatus side. The method includes: The first apparatus detects a sixth multi-carrier signal, where the sixth multi-carrier signal includes at least two subcarriers $f_{21}$, $f_{22}$, and the two subcarriers respectively correspond to discrete frequencies in a spectrum. The first apparatus determines an eleventh phase $\Phi'_{31}$ corresponding to the subcarrier $f_{21}$ and a twelfth phase $\Phi'_{32}$ corresponding to the subcarrier $f_{32}$ included in the sixth multi-carrier signal, where the sixth multi-carrier signal is a third multi-carrier signal that is sent by the second apparatus and propagated between channels. The first apparatus receives second information, where the second information indicates a fifth phase and a sixth phase that correspond to the third multi-carrier signal, the fifth phase $\Phi'_{21}$ corresponds to the subcarrier signal $f_{21}$, and the sixth phase $\Phi'_{22}$ corresponds to the subcarrier $f_{22}$. The first apparatus adjusts a local clock based on a fifth phase difference, a sixth phase difference, and a fifth frequency difference, where the fifth phase difference is a phase difference between the eleventh phase and the fifth phase, that is, $\Delta\Phi_{21} = \Phi'_{21} - \Phi_{21}$, the sixth phase difference is a phase difference between the twelfth phase and the sixth phase, that is, $\Delta\Phi_{22} = \Phi'_{22} - \Phi_{22}$, the fifth frequency difference is a frequency difference corresponding to the sixth multi-carrier signal, and a frequency difference corresponding to the subcarriers $f_{22}$, $f_{21}$ included in a fifth multi-carrier signal is $\Delta'f = f_{22} - f_{21}$. The first apparatus may adjust the local clock to $t_{clk1} - \frac{\Delta\tau_{21}}{2}$. The first apparatus sends a fifth multi-carrier signal, where the fifth multi-carrier signal includes at least two subcarriers $f_{31}$, $f_{32}$, and the two subcarriers respectively correspond to discrete frequencies in a spectrum. The first apparatus determines a ninth phase $\Phi_{21}$ corresponding to the subcarrier $f_{31}$ and a tenth phase $\Phi_{22}$ corresponding to the subcarrier $f_{32}$ included in the fifth multi-carrier signal. The first apparatus sends third information, where the third information indicates the ninth phase $\Phi_{21}$ and the tenth phase $\Phi_{22}$ corresponding to the fifth multi-carrier signal, and the fifth multi-carrier signal and the third information are used by the second apparatus to adjust the local clock.

In this manner, a geometric delay $\Delta\tau_{g_12}$ corresponding to a two-site distance between the first apparatus and the second apparatus may be eliminated, so as to implement time synchronization between the first apparatus and the second apparatus with high precision, low costs, and low complexity.

With reference to an implementation of the second aspect, when a geometric distance between the first apparatus and the second apparatus is unknown, this application provides a two-way measurement method, to further eliminate a first delay amount $\Delta\tau_{g_12}$ associated with the geometric distance. The method requires clock adjustment on a second apparatus side. The method includes: The first apparatus detects a sixth multi-carrier signal, where the sixth multi-carrier signal includes at least two subcarriers $f_{21}$, $f_{22}$, and the two subcarriers respectively correspond to discrete frequencies in a spectrum. The first apparatus determines an eleventh phase $\Phi'_{31}$ corresponding to the subcarrier $f_{21}$ and a twelfth phase $\Phi'_{32}$ corresponding to the subcarrier $f_{32}$ included in the sixth multi-carrier signal, where the sixth multi-carrier signal is a third multi-carrier signal that is sent by the second apparatus and propagated between channels. The first apparatus receives second information, where the second information indicates a fifth phase and a sixth phase that correspond to the third multi-carrier signal, the fifth phase $\Phi'_{21}$ corresponds to the subcarrier signal $f_{21}$, and the sixth phase $\Phi'_{22}$ corresponds to the subcarrier $f_{22}$. The first apparatus determines a second adjustment amount $\Delta\tau_{21}$ based on a fifth phase difference, a sixth phase difference, and a fifth frequency difference, where the fifth phase difference is a phase difference between the eleventh phase and the fifth phase, that is, $\Delta\Phi_{21} = \Phi'_{21} - \Phi_{21}$, the sixth phase difference is a phase difference between the twelfth phase and the sixth phase, that is, $\Delta\Phi_{22} = \Phi'_{22} - \Phi_{22}$, the fifth frequency difference is a frequency difference corresponding to the sixth multi-carrier signal, and a frequency difference corresponding to the subcarriers $f_{22}$, $f_{21}$ included in the sixth multi-carrier signal is $\Delta' f = f_{22} - f_{21}$. The first apparatus sends fourth information, where the fourth information indicates the second adjustment amount $\Delta\tau_{21}$, and the second adjustment amount is used by the second apparatus to adjust the local clock. The first apparatus sends a fifth multi-carrier signal, where the fifth multi-carrier signal includes at least two subcarriers $f_{31}$, $f_{32}$, and the two subcarriers respectively correspond to discrete frequencies in a spectrum. The first apparatus determines a ninth phase $\Phi_{21}$ corresponding to the subcarrier $f_{31}$ and a tenth phase $\Phi_{22}$ corresponding to the subcarrier $f_{32}$ included in the fifth multi-carrier signal. The first apparatus sends third information, where the third information indicates the ninth phase $\Phi_{21}$ and the tenth phase $\Phi_{22}$ corresponding to the fifth multi-carrier signal, and the fifth multi-carrier signal and the third information are used by the second apparatus to adjust the local clock.

In this manner, a geometric delay $\Delta\tau_{g_12}$ corresponding to a two-site distance between the first apparatus and the second apparatus may be eliminated, so as to implement time synchronization between the first apparatus and the second apparatus with high precision, low costs, and low complexity.

With reference to the first aspect or the second aspect, in some possible implementations, sending the third multi-carrier signal by the second apparatus and sending the fifth multi-carrier signal by the first apparatus occur in parallel. In other words, the first apparatus and the second apparatus respectively send the fifth multi-carrier signal and the third multi-carrier signal at an agreed time. This can offset a response time of the first apparatus and the second apparatus, thereby improving precision of time synchronization.

Further, sending the third multi-carrier signal and the second information by the second apparatus and sending the fifth multi-carrier signal and the third information by the first apparatus occur in parallel, where "occur in parallel" means that the second apparatus and the first apparatus respectively send signals at a same agreed moment. Further, working modes of the first apparatus and the second apparatus may be full-duplex modes. This can further offset a response time of the first apparatus and the second apparatus, thereby improving precision of time synchronization.

With reference to the first aspect or the second aspect, in some possible implementations, the first apparatus locally analyzes the third phase and the fourth phase of the second multi-carrier signal, and obtains time information corresponding to the second multi-carrier signal; and the first apparatus sends the first information that indicates the third phase and the fourth phase that correspond to the second multi-carrier signal and the time information corresponding to the second multi-carrier signal. In an implementation, a timestamp (Timestamp) may indicate the time information corresponding to the second multi-carrier signal. The timestamp may be a number of seconds since January 1, 1970 (00:00:00 GMT), and the first device may send the timestamp by using a character sequence.

Therefore, the second apparatus may obtain, through analysis by using the time information corresponding to the second multi-carrier signal, the phases $\Phi'_1$ and $\Phi'_2$ corresponding to the subcarriers $f_1$, $f_2$ included in the first multi-carrier signal. Further, because the subcarrier frequencies $f_1$, $f_2$ included in the first multi-carrier signal may slightly change after a channel transmission, the second apparatus may obtain, through analysis by using a corresponding moment marked by the timestamp, the subcarriers $f'_1$, $f'_2$ included in the first multi-carrier signal. By sending and obtaining time information corresponding to a multi-carrier signal, precision of time synchronization can be further improved.

With reference to the first aspect and the second aspect, in some possible implementations, the first multi-carrier signal includes a first subcarrier $f_1$, a second subcarrier $f_2$, and a third subcarrier $f_3$, the first subcarrier, the second subcarrier, and the third subcarrier respectively correspond to different frequencies, a frequency difference between the first subcarrier and the second subcarrier corresponds to a third frequency difference, that is, $\Delta f = f_1 - f_2$, a frequency difference between the second subcarrier and the third subcarrier corresponds to a fourth frequency difference, that is, $\Delta''' f = f_2 - f_3$, and the third frequency difference $\Delta f$ is greater than the fourth frequency difference $\Delta''' f$. A measurement range is inversely proportional to a frequency difference, and in a case of an equal frequency difference, a measurement error during calculation of a signal delay difference increases. Therefore, by setting a signal in this manner, when the signal

delay difference is calculated based on an interference measurement technology, the measurement range (that is, a distance range of the first apparatus and the second apparatus) can be expanded, and the measurement error during calculation of the signal delay difference can also be reduced.

Further, the third frequency difference $\Delta f$ is K times the fourth frequency difference $\Delta'''f$, and K is a positive integer. In other words, a frequency difference between frequencies corresponding to subcarriers in a spectrum increases in equal proportion, thereby further increasing an operation speed, quickly calculating an ambiguity, and saving frequency resources.

Further, K is 2. In the technical solution of calculating the signal delay difference based on the interference measurement technology in this application, for example, the second apparatus generates a series of binary exponential sequences, for example, $\{2^{i-1}\}$, based on a difference between phases locally obtained by the first apparatus and the second apparatus through two-site analysis, where i is a natural number greater than or equal to 1, so as to assist in quickly calculating an ambiguity and increasing an operation speed.

According to a third aspect, a communication apparatus is provided. In a possible implementation, the communication apparatus may include modules or units for performing the method/operations/steps/actions described in the first aspect in one-to-one correspondence. The modules or units may be implemented by hardware circuits, software, or combinations of hardware circuits and software. In a possible implementation, the apparatus may include a transceiver module and a signal processing module.

The transceiver module is configured to receive a first multi-carrier signal and receive first information. The processing module is configured to: detect a first multi-carrier signal, to determine a first phase $\Phi'_1$ and a second phase $\Phi'_2$ corresponding to the first multi-carrier signal; determine, based on the first information, a third phase $\Phi_1$ and a fourth phase $\Phi_2$ corresponding to a second multi-carrier signal; determine a first phase difference $\Delta\Phi_1 = \Phi'_1 - \Phi_1$ and a second phase difference $\Delta\Phi_2 = \Phi'_2 - \Phi_2$; determine a first frequency difference $\Delta f$ corresponding to the first multi-carrier signal; and perform time synchronization with a first apparatus based on the first phase difference, the second phase difference, and the first frequency difference.

In some implementations, the processing unit uses the first phase difference $\Delta\Phi_1$, the second phase difference $\Delta\Phi_2$, and the first frequency difference $\Delta f$ as inputs by using an empirical formula, a neural network model, a transfer function, a convolution formula, or the like, to output an adjustment amount or a clock difference to adjust a local clock of the second apparatus, so that the first apparatus and the second apparatus are time-synchronized.

In some implementations, the processing unit determines a first adjustment amount based on the first phase difference $\Delta\Phi_1$, the second phase difference $\Delta\Phi_2$, and the first frequency difference $\Delta f$, where the first adjustment amount is used for time synchronization between the first apparatus and the second apparatus, and the first adjustment amount $\Delta\tau$ meets the following condition: $\Delta\tau = \frac{\Delta\Phi_1 - \Delta\Phi_2}{2\pi\Delta f}$.

In some implementations, when the processing unit performs time synchronization with the first apparatus based on the first phase difference $\Delta\Phi_1$, the second phase difference $\Delta\Phi_2$, and the first frequency difference $\Delta f$, a first delay amount is considered.

In some implementations, the processing unit determines a first adjustment amount based on the first phase difference $\Delta\Phi_1$, the second phase difference $\Delta\Phi_2$, and the first frequency difference $\Delta f$, where the first adjustment amount is used for time synchronization between the first apparatus and the second apparatus, and the first adjustment amount $\Delta\tau$ meets the following condition: $\Delta\tau = \frac{\Delta\Phi_1 - \Delta\Phi_2}{2\pi\Delta f} - \Delta\tau_{g_12}$.

In addition, the transceiver unit may be further configured to: send a third multi-carrier signal, send second information, receive a fourth multi-carrier signal, and receive third information. The processing unit obtains a third adjustment amount based on the third multi-carrier signal and the second information, and adjusts the local clock based on the third adjustment amount.

In addition, the transceiver unit may be further configured to: receive a fourth multi-carrier signal, receive third information, receive a fourth multi-carrier signal, receive third information, and receive fourth information. The processing unit obtains a third adjustment amount based on a third multi-carrier signal and second information, obtains a second adjustment amount based on the fourth information, and adjusts the local clock based on the second adjustment amount and the third adjustment amount.

In some implementations, the processing unit is further configured to determine time information corresponding to the second multi-carrier signal, where the time information may be determined based on a timestamp included in the first information.

In some implementations, the first multi-carrier signal received by the transceiver module includes a first subcarrier $f_1$, a second subcarrier $f_2$, and a third subcarrier $f_3$, the first subcarrier, the second subcarrier, and the third subcarrier respectively correspond to different frequencies, a frequency difference between the first subcarrier and the second subcarrier corresponds to a third frequency difference, that is, $\Delta f = f_1 - f_2$, a frequency difference between the

second subcarrier and the third subcarrier corresponds to a fourth frequency difference, that is, $\Delta'''f = f_2 - f_3$ , and the third frequency difference $\Delta f$ is greater than the fourth frequency difference $\Delta'''f$ . Further, the third frequency difference $\Delta f$ is K times the fourth frequency difference $\Delta'''f$, and K is a positive integer. Further, K is 2.

According to a fourth aspect, a communication apparatus is provided. In a possible implementation, the communication apparatus may include modules or units for performing the method/operations/steps/actions described in the second aspect in one-to-one correspondence. The modules or units may be implemented by hardware circuits, software, or combinations of hardware circuits and software. In a possible implementation, the apparatus may include a transceiver module and a signal processing module.

The transceiver module is configured to receive a sixth multi-carrier signal and receive second information. The processing module is configured to detect a second multi-carrier signal, to determine a third phase $\Phi_1$ and a fourth phase $\Phi_2$ corresponding to a first multi-carrier signal.

In addition, the transceiver unit may further receive the sixth multi-carrier signal, receive the second information, send a fifth multi-carrier signal, and send third information. The processing unit adjusts a local clock based on the sixth multi-carrier signal and the second information.

In addition, the transceiver unit may be further configured to: receive the sixth multi-carrier signal, receive the second information, send a fifth multi-carrier signal, and send third information and fourth information. The processing unit obtains a second adjustment amount based on the sixth multi-carrier signal and the second information.

In some implementations, the processing unit is further configured to determine time information corresponding to the second multi-carrier signal, where the time information may be determined based on a timestamp and sent by using first information.

In some implementations, the second multi-carrier signal sent by the transceiver module includes a first subcarrier $f_1$, a second subcarrier $f_2$, and a third subcarrier $f_3$, the first subcarrier, the second subcarrier, and the third subcarrier respectively correspond to different frequencies, a frequency difference between the first subcarrier and the second subcarrier corresponds to a third frequency difference, that is, $\Delta f = f_1 - f_2$, a frequency difference between the second subcarrier and the third subcarrier corresponds to a fourth frequency difference, that is, $\Delta'''f = f_2 - f_3$ , and the third frequency difference $\Delta f$ is greater than the fourth frequency difference $\Delta'''f$ . Further, the third frequency difference $\Delta f$ is K times the fourth frequency difference $\Delta'''f$, and K is a positive integer. Further, K is 2. According to a fifth aspect, a chip is provided, including a processor. The processor is coupled to a memory, the memory is configured to store a computer program, and the processor is configured to execute the computer program stored in the memory, so that some or all steps of the methods according to any one of the first aspect and the possible implementations of the first aspect and any one of the second aspect and the possible implementations of the second aspect are performed.

According to a sixth aspect, a computer-readable storage medium is provided. The storage medium stores a computer program or instructions, and when the computer program or the instructions are executed by a processor, some or all steps of the methods according to any one of the first aspect and the possible implementations of the first aspect and any one of the second aspect and the possible implementations of the second aspect are performed.

According to a seventh aspect, a computer product is provided. When the computer program product runs, some or all steps of the methods according to any one of the first aspect and the possible implementations of the first aspect and any one of the second aspect and the possible implementations of the second aspect are performed.

According to an eighth aspect, a communication system is provided, including the first communication apparatus according to the third aspect and the possible implementations of the foregoing aspect and the second communication apparatus according to the fourth aspect and the possible implementations of the foregoing aspect.

## BRIEF DESCRIPTION OF DRAWINGS

FIG. 1 is a diagram of an application scenario of implementing time synchronization between a first apparatus and a second apparatus based on an interference measurement technology according to this application;
FIG. 2 is a diagram of implementing time synchronization between a first device and a second device based on an interference measurement technology according to this application;
FIG. 3 is a diagram of a method for calculating a signal delay difference according to this application;
FIG. 4 is a diagram of implementing time synchronization between a first device and a second device based on an interference measurement technology according to this application;
FIG. 5 is a diagram of a method for eliminating a geometric delay difference by using a two-way measurement method according to this application;
FIG. 6 is a diagram of another method for eliminating a geometric delay difference by using a two-way measurement method according to this application;
FIG. 7 is a schematic flowchart of implementing time synchronization based on an interference measurement

technology according to this application;

FIG. 8 shows a simulation result of a time synchronization solution according to this application;

FIG. 9 is a diagram of feature setting of multi-carrier signals sent by a first device and a second device according to this application;

FIG. 10 is another diagram of feature setting of multi-carrier signals sent by a first device and a second device according to this application;

FIG. 11 is a diagram of an apparatus for implementing local device analysis of a multi-carrier signal according to this application;

FIG. 12 is a diagram of an apparatus for implementing a time synchronization method based on interference measurement according to this application; and

FIG. 13 is a diagram of structures of a first device and a second device according to an embodiment of this application.

## DESCRIPTION OF EMBODIMENTS

This application provides a time synchronization method, to improve precision of time synchronization between devices and reduce costs.

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, such as a new radio (new radio, NR) system, and systems evolved after 5G, such as a 5.5G system and a 6th generation (6th generation, 6G) system.

An application scenario of this application includes but is not limited to terrestrial cellular communication, a non-terrestrial network (non-terrestrial network, NTN), vehicle-to-everything (vehicle-to-everything, V2X), integrated access and backhaul (integrated access and backhaul, IAB), reconfigurable intelligent surface (reconfigurable intelligent surface, RIS) communication, and the like. An NTN system includes a non-terrestrial device, and the non-terrestrial device may serve as a base station, a terminal device, or a relay device. The non-terrestrial device may be an unmanned aerial vehicle, a hot air balloon, a low-orbit satellite, a medium-orbit satellite, a high altitude platform station (high altitude platform station, HAPS) device, or the like.

The technical solutions in embodiments of this application are applicable to both a homogeneous network scenario and a heterogeneous network scenario. In addition, a transmission point is not limited. Coordinated multipoint transmission may be performed between macro base stations, between micro base stations, or between a macro base station and a micro base station. The technical solutions are applicable to the FDD/TDD systems. The technical solutions in embodiments of this application are applicable to a low-frequency scenario (sub 6G), and are also applicable to a high-frequency scenario (above 6 GHz), terahertz, optical communication, and the like. The technical solutions in embodiments of this application are applicable to communication between a network device and a terminal, and are also applicable to communication between network devices, communication between terminals, and communication of an internet of vehicles, an internet of things, an industrial internet, and the like.

The technical solutions in embodiments of this application are applicable to a scenario in which a terminal is connected to a single base station. The base station connected to the terminal and a core network (core network, CN) connected to the base station are of a same standard or different standards. For example, the CN is a 5G CN, the base station is a 5G base station, and the 5G base station is directly connected to the 5G CN; or the CN is a 5G CN, the base station is a 4G base station, and the 4G base station is directly connected to the 5G Core. The technical solutions in embodiments of this application are also applicable to a dual connectivity (dual connectivity, DC) scenario in which a terminal is connected to at least two base stations.

The terminal device in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to the wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a

wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in embodiments of this application.

In embodiments of this application, an apparatus for implementing a function of a terminal device may be a terminal device, or may be an apparatus, for example, a chip system, that can enable a terminal device to implement the function. The apparatus may be mounted in a terminal device or used in a manner of matching a terminal device. In embodiments of this application, the chip system may include a chip, or may include a chip and another discrete component.

The network device in embodiments of this application is a device having a wireless transceiver function, and is an access network device configured to communicate with a terminal device. The access network device may be a node in a radio access network (radio access network, RAN), and may be referred to as a base station, or may be referred to as a RAN node. Alternatively, the access network device may be a device having some or all functions of a base station. For example, when the base station uses a central unit (central unit, CU) and distributed unit (distributed unit, DU) architecture, the access network device may include a CU and/or a DU. The access network device may be an evolved NodeB (evolved NodeB, eNB or eNodeB) in LTE, a base station in a 5G network such as a next generation NodeB (gNodeB, gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The network device in embodiments of this application may alternatively include base stations in various forms, for example, a macro base station, a micro base station (also referred to as a small cell), a relay station, a transmission point (transmitting and receiving point, TRP), a transmitting point (transmitting point, TP), a mobile switching center, a device that bears a function of a base station in unmanned aerial vehicle communication, device-to-device (device-to-device, D2D) communication, vehicle-to-everything (vehicle-to-everything, V2X) communication, and machine-to-machine (machine-to-machine, M2M) communication, and a network device in an NTN communication system. This is not specifically limited in embodiments of this application.

In embodiments of this application, an apparatus for implementing a function of a network device may be a network device, or may be an apparatus, for example, a chip system, that can enable a network device to implement the function. The apparatus may be mounted in a network device or used in a manner of matching a network device. In embodiments of this application, the chip system may include a chip, or may include a chip and another discrete component.

In this application, a time synchronization method is provided. A signal delay difference may be calculated based on an interference measurement technology, to obtain a clock difference for time synchronization between a first device and a second device.

First, an application scenario of the time synchronization method provided in this application is described. FIG. 1 is a diagram of an application scenario of implementing time synchronization between a first device and a second device based on an interference measurement technology according to this application. As shown in (a) in FIG. 1, the time synchronization solution in this application may be applied to a scenario in which a terminal is connected to a plurality of network devices. For example, in a process in which a network device 101 and a network device 102 locate a terminal device 103 based on a time difference of arrival (Time Difference of Arrival, TDOA) positioning method, a time synchronization error directly causes the network device 101 and the network device 102 to inaccurately locate the terminal device 103. However, in the technical solution of this application, higher time synchronization precision can be implemented by using lower costs, thereby improving positioning accuracy. As shown in (b) in FIG. 1, the time synchronization solution in this application may be applied to a scenario in which a terminal is connected to a network device. For example, in a process in which a network device 112 locates a terminal device 111 based on a time difference of arrival ((Time of Arrival, TOA) positioning method, a time synchronization error directly causes the network device 112 to inaccurately locate the terminal device 111. However, in the technical solution of this application, higher time synchronization precision can be implemented by using lower costs, thereby improving positioning accuracy. In addition, the time synchronization solution in this application may be applied to multi-station collaboration. In the technical solution of this application, higher time synchronization precision can be implemented by using lower costs, thereby improving perception performance.

FIG. 2 is a diagram of implementing time synchronization between a first device and a second device based on an interference measurement technology according to this application. During collaboration between the first device and the second device, it is set that a local independent clock $t_{clk1}$ of the first device is not synchronized with a local independent clock $t_{clk2}$ of the second device, and a clock difference $t_{clk1}$ - $t_{clk2}$ = $\Delta\tau_{clk}$ exists.

Because a distance and a clock difference exist between the first device and the second device, signals of a same signal source have a signal delay difference between the first device and the second device. It may be understood that, when the first device sends a signal to the second device, there is a signal delay difference $\Delta\tau_{12}=\Delta\tau_{g_12}+\Delta\tau_{clk}+n_1\tau_r$. $\Delta\tau_{g_12}$ is a geometric delay, that is, a delay difference caused by a geometric distance between the first device and the second

device. The geometric distance may be a route that a signal passes through during propagation, and is related to only the distance between the first device and the second device. $\Delta\tau_{clk}$ is the clock difference, that is, a delay caused by asynchronization between the local independent clock $t_{clk1}$ of the first device and the local independent clock $t_{clk2}$ of the second device. $n_1\tau_r$ is an integer periodicity ambiguity, that is, a quantity of unknown integral wavelengths included in an estimated delay value, where $n_1$ is a natural number greater than or equal to 1, and $\tau_r$ is one integer periodicity ambiguity; and the integer periodicity ambiguity $n_1\tau_r$ may be eliminated in a process of calculating the signal delay difference $\Delta\tau_{12}$ through calculation value restriction.

Similarly, when the second device sends a signal to the first device, because directions of two signal transmissions are opposite, a signal delay difference is $\Delta\tau_{21}=\Delta\tau_{g_12} - \Delta\tau_{clk}+n_2\tau_r$. $\Delta\tau_{g_12}$ is the geometric delay, that is, the delay difference caused by the geometric distance between the first device and the second device. $\Delta\tau_{clk}$ is the clock difference. $n_2\tau_r$ is an integer periodicity ambiguity, where $n_2$ is a natural number greater than or equal to 1, and $\tau_r$ is the integer periodicity ambiguity; and the integer periodicity ambiguity $n_2\tau_r$ may be eliminated in a process of calculating the signal delay difference $\Delta\tau_{21}$ through calculation value restriction.

When the geometric distance between the first device and the second device is known, that is, the geometric delay $\Delta\tau_{g_12}$ is known, in this application, the first device may send a signal to the second device by using the interference measurement technology shown in Process 2 in FIG. 2, and the second device calculates the signal delay difference $\Delta\tau_{12} = \Delta\tau_{g_12} + \Delta\tau_{clk}+n_1\tau_r$, to eliminate the integer periodicity ambiguity $n_1\tau_r$, and calculates the clock difference $\Delta\tau_{clk}$ after the known geometric delay $\Delta\tau_{g_12}$ is subtracted. The second device adjusts a local clock $t'_{clk2} = t_{clk2} - \Delta\tau_{clk}$ by using the clock difference $\Delta\tau_{clk}$, so that the first device and the second device are time-synchronized, thereby implementing high precision of time synchronization between devices and reducing costs.

When the geometric distance between the first device and the second device is unknown, that is, the geometric delay $\Delta\tau_{g_12}$ is unknown, as shown in Process 1 and Process 2 in FIG. 2, in this application, the geometric delay may be eliminated and time synchronization may be implemented in a two-way measurement manner.

Process 1:

The first device sends a signal to the second device, and the second device calculates a signal delay difference $\Delta'\tau_{12}=\Delta\tau_{g_12}+\Delta\tau_{clk} +n_1\tau_r$, based on the signal sent by the first device.

The second device sends a signal to the first device, and the first device calculates a delay difference based on the signal sent by the second device. Because directions of two signal transmissions are opposite, the signal delay difference obtained by the first device through calculation is $\Delta\tau_{21}=\Delta\tau_{g_12} - \Delta\tau_{clk}+n_2\tau_r$.

Process 2:

The first device sends a signal to the second device, and the second device calculates the signal delay difference $\Delta\tau_{12}=\Delta\tau_{g_12}+\Delta\tau_{clk}+n_1\tau_r$ based on the signal sent by the first device.

In a manner of implementing time synchronization based on Process 1 and Process 2, the first device adjusts the local clock $t_{clk1}$ based on $\Delta\tau_{21}=\Delta\tau_{g_12} - \Delta\tau_{clk}+n_2\tau_r$, and the second device adjusts the local clock $t_{clk2}$ based on $\Delta'\tau_{12} = \Delta\tau_{g_12} + \Delta\tau_{clk} + n_1\tau_r$ and $\Delta\tau_{12}=\Delta\tau_{g_12}+\Delta\tau_{clk} +n_1$. The local clock of the first device is adjusted to $t'_{clk1} = t_{clk1} - \frac{\Delta\tau_{21}}{2}$, and the local clock of the second device is adjusted to $t'_{clk2} = t_{clk2} + \frac{\Delta\tau'_{12}}{2} - \Delta\tau_{12}$. In this case, a difference between the local clock of the first device and the local clock of the second device is $t'_{clk1} - t'_{clk2} = (t_{clk1} - t_{clk2}) - \left(\frac{\Delta\tau_{21}}{2} + \frac{\Delta\tau'_{12}}{2}\right) + \Delta\tau_{12} = (t_{clk1} - t_{clk2}) - \left[\Delta\tau_{g_{12}} + \left(\frac{n_1\tau_r+n_2\tau_r}{2}\right)\right] + \Delta\tau_{g_12} - \Delta\tau_{clk} + n_2\tau_r = (t_{clk1} - t_{clk2}) - \Delta\tau_{clk} + \frac{n_2\tau_r-n_1\tau_r}{2}$. After the integer periodicity ambiguities $n_1\tau_r$ and $n_2\tau_r$ are eliminated through calculation value restriction, the difference between the local clock of the first device and the local clock of the second device is $t'_{clk1} - t'_{clk2} =(t_{clk1} - t_{clk2}) - \Delta\tau_{clk}=0$, and the first device and the second device are time-synchronized.

In another manner of implementing time synchronization based on Process 1 and Process 2, the first device sends the calculated signal delay difference $\Delta\tau_{21}=\Delta\tau_{g_12} - \Delta\tau_{clk}+n_2\tau_r$ to the second device, and the second device adjusts the local clock $t_{clk2}$ based on $\Delta\tau_{12} =\Delta\tau_{g_12} +\Delta\tau_{clk} +n_1\tau_r$, $\Delta'\tau_{12} =\Delta\tau_{g_12} +\Delta\tau_{clk} +n_1\tau_r$, and $\Delta\tau_{21} =\Delta\tau_{g_12} - \Delta\tau_{clk}+n_2\tau_r$. The local clock of the second device is adjusted to $t'_{clk2} = t_{clk2} - (\Delta\tau_{12} - \frac{\Delta\tau'_{12}+\Delta\tau_{21}}{2}$. In this case, a difference between the local clock of the first device and the local clock of the second device is

$t'_{clk1} - t'_{clk2} = (t_{clk1} - t_{clk2}) - \left(\frac{\Delta\tau_{21}}{2} + \frac{\Delta\tau'_{12}}{2}\right) + \Delta\tau_{12} = (t_{clk1} - t_{clk2}) - \left[\Delta\tau_{g_{12}} + \left(\frac{n_1\tau_r + n_2\tau_r}{2}\right)\right] + \Delta\tau_{g_{12}} - \Delta\tau_{clk} + n_2\tau_r\tau_r = (t_{clk1} - t_{clk2}) - \Delta\tau_{clk} + \frac{n_2\tau_r - n_1\tau_r}{2}$. After the integer periodicity ambiguities $n_1\tau_r$ and $n_2\tau_r$ are eliminated through calculation value restriction, the difference between the local clock of the first device and the local clock of the second device is $t'_{clk1} - t'_{clk2} = (t_{clk1} - t_{clk2}) - \Delta\tau_{clk} = 0$, and the first device and the second device are time-synchronized.

In the foregoing time synchronization processes, the integer periodicity ambiguity may be eliminated, for example, may be eliminated through restriction $\text{restrict}(\frac{\Delta\tau_{12}+\Delta\tau_{21}}{2}) \in (-0.5\tau_r, 0.5\tau_r)$.

Based on Process 1 and Process 2 in FIG. 2, the first device and the second device are time-synchronized, so that time synchronization between the first device and the second device with high precision, low costs, and low process complexity is further implemented when the geometric distance between the first device and the second device is unknown.

In this application, calculating a signal delay difference based on the interference measurement technology may be sending a multi-carrier signal to the second device based on the first device. The multi-carrier signal includes at least two subcarriers. The subcarriers correspond to different discrete frequencies in a spectrum, and a frequency $f_i$ (i is a natural number greater than or equal to 1) corresponding to each subcarrier in the spectrum may be set to $f_1 \sim f_i$. For ease of description, a multi-carrier signal that is sent by the first device and that is not transmitted through a channel is referred to as a second multi-carrier signal, and a multi-carrier signal that is received by the second device and that is propagated between channels is referred to as a first multi-carrier signal.

In an implementation, the first device may locally obtain, through analysis, phases $\Phi_1$ to $\Phi_i$ corresponding to subcarriers $f_1 \sim f_i$ included in the second multi-carrier signal, and send the second multi-carrier signal and first information to the second device. The first information indicates the phases $\Phi_1$ to $\Phi_i$ that correspond to the subcarriers $f_1 \sim f_i$ included in the second multi-carrier signal and that are locally obtained by the first device through analysis. After the second device receives the first multi-carrier signal transmitted between channels, the second device locally obtains, through analysis, phases $\Phi'_1$ to $\Phi'_i$ corresponding to subcarriers $f_1 \sim f_i$ of the first multi-carrier signal, differentiates the phases $\Phi'_1$ to $\Phi'_i$ corresponding to the subcarriers $f_1 \sim f_i$ of the first multi-carrier signal from the phases $\Phi_1$ to $\Phi_i$ corresponding to the subcarriers $f_1 \sim f_i$ included in the second multi-carrier signal, for example, obtains $\Delta\Phi_i$ through $\Phi'_i$-$\Phi_i$, and calculates a signal delay difference based on a frequency difference between the subcarriers $f_1 \sim f_i$ and $\Delta\Phi_1 \sim \Delta\Phi_i$.

In another implementation, the first device may locally obtain, through analysis, phases $\Phi_1$ to $\Phi_i$ corresponding to subcarriers $f_1 \sim f_i$ included in the second multi-carrier signal, and time information locally corresponding to the second multi-carrier signal in the first device. The first device sends the second multi-carrier signal and first information to the second device. The first information indicates the phases $\Phi_1$ to $\Phi_i$ that correspond to the subcarriers $f_1 \sim f_i$ included in the second multi-carrier signal and that are locally obtained by the first device through analysis, and the time information corresponding to the second multi-carrier signal. After the second device receives the first multi-carrier signal transmitted between channels, the second device locally obtains, through analysis by using the time information corresponding to the second multi-carrier signal, phases $\Phi'_1$ to $\Phi'_i$ corresponding to subcarriers $f_1 \sim f_i$ included in the first multi-carrier signal, differentiates the phases $\Phi'_1$ to $\Phi'_i$ corresponding to the subcarriers $f_1 \sim f_i$ of the first multi-carrier signal from the phases $\Phi_1$ to $\Phi_i$ corresponding to the subcarriers $f_1 \sim f_i$ included in the second multi-carrier signal, for example, obtains $\Delta\Phi_i$ through $\Phi'_i$-$\Phi_i$, and calculates a signal delay difference based on a frequency difference between the subcarriers $f_1 \sim f_i$ and $\Delta\Phi_1 \sim \Delta\Phi_i$. Further, because the first multi-carrier signal is transmitted between channels, frequencies of the subcarriers included in the first multi-carrier signal may slightly change. The second device may further locally obtain, through analysis by using the time information corresponding to the second multi-carrier signal, subcarriers $f'_1 \sim f'_i$ included in the first multi-carrier signal, so as to further accurately calculate the signal delay difference.

In another implementation, the first device sends the second multi-carrier signal and time information locally corresponding to the second multi-carrier signal in the first device to the second device. After the second device receives the first multi-carrier signal transmitted between channels, the second device locally obtains, through analysis, phases $\Phi'_1$ to $\Phi'_i$ corresponding to sub-carriers $f_1$~$f_i$ included in the first multi-carrier signal, and uses the time information corresponding to the second multi-carrier signal to infer phases $\Phi_1$ to $\Phi_i$ that correspond to the sub-carriers $f_1$~$f_i$ included in the first multi-carrier signal and that are locally obtained by the first device through analysis. The second device differentiates the phases $\Phi'_1$ to $\Phi'_i$ corresponding to the subcarriers $f_1 \sim f_i$ of the first multi-carrier signal from phases $\Phi_1$ to $\Phi_i$ corresponding to subcarriers $f_1$~$f_i$ included in the second multi-carrier signal, for example, obtains $\Delta\Phi_1 \sim \Delta\Phi_i$ through $\Phi'_i$-$\Phi_i$, and calculates a signal delay difference based on a frequency difference between the subcarriers $f_1 \sim f_i$ and $\Delta\Phi_i$. The time information corresponding to the second multi-carrier signal of the second device is used to infer phases locally corresponding to the first multi-carrier signal on the first device, so that complexity of a form of sending a signal by the first device to the second device can be reduced, thereby reducing process complexity.

It should be understood that, in the foregoing calculation, a manner of calculating both the frequency difference between the subcarriers $f_1$~$f_i$ and the phase difference between the phases $\Delta\Phi_1$~$\Delta\Phi_i$ by using the corresponding difference between the first multi-carrier signal and the second multi-carrier signal is used as an example for description. A specific calculation method and positive/negativeness thereof are determined according to an actual situation. For example, a phase difference may alternatively be obtained by subtracting a phase of the first multi-carrier signal from a phase of the second multi-carrier signal.

It should be understood that a specific form of the time information and a manner in which the first device sends the time information are not limited in this application. In an implementation, a timestamp (Timestamp) may indicate the time information corresponding to the second multi-carrier signal. The timestamp may be a number of seconds since January 1, 1970 (00:00:00 GMT), and the first device may send the timestamp by using a character sequence.

In the foregoing three manners, the signal delay difference is calculated by using a local correlation-based interference measurement method, that is, the second device locally obtains, through analysis, a phase corresponding to the first multi-carrier signal and a phase corresponding to the second multi-carrier signal, and then obtains a delay difference based on the measured phases. This method can be used to obtain a simple round trip time measurement method with a small system error during round trip time (Round trip time, RTT) measurement. In addition, directly sending a signal phase can reduce an amount of information in an interaction process, and avoid a transmission of sampled raw data. Finally, the method avoids using a cross-correlation to calculate a phase difference, and avoids signal-to-noise ratio deterioration that may be caused by the cross-correlation method while reducing a calculation amount, thereby improving synchronization precision.

It should be understood that a method in which the second device calculates a signal delay difference based on a frequency difference between subcarriers $f_1$~$f_i$ and $\Delta\Phi_i$ is not limited in this application. For example, the calculation method may be a mapping relationship obtained by fitting a large amount of experimental data, or a dedicated neural network model is trained based on a large amount of experimental data.

In an implementation, FIG. 3 is a diagram of a method for calculating a signal delay difference according to this application. In a case in which the first multi-carrier signal includes two subcarriers, the signal delay difference $\Delta\tau_{12}$ may be obtained by using a formula $\Delta\tau_{12} = \frac{\Delta\Phi_1 - \Delta\Phi_2}{2\pi(f_1 - f_2)}$. $f_1$ is a frequency of a first subcarrier included in the first multi-carrier signal, and $f_2$ is a frequency of a second subcarrier included in the first multi-carrier signal. $\Delta\Phi_1$ is a first subcarrier phase difference locally obtained by each of the first device and the second device through analysis, and $\Delta\Phi_2$ is a second subcarrier phase difference locally obtained by each of the first device and the second device through analysis. In a case in which the first multi-carrier signal includes more than two subcarriers, by way of example but not limitation, a slope of a straight line, that is, the signal delay difference $\Delta\tau_{12}$, may be obtained through straight line fitting. A first adjustment amount is calculated by using an interference measurement method, so that time synchronization between the first apparatus and the second apparatus with high precision, low costs, and low process complexity can be further implemented.

In addition, in some solutions of this application, the second device may alternatively directly output an adjustment amount or a clock difference $\Delta\tau_{clk}$ by using a frequency difference between inputs $f_1$~$f_i$ and $\Delta\Phi_i$ and by using a transfer function, a convolution formula, or the like, to adjust a local clock of the second device. This is not limited in this application. In some solutions of this application, the second device directly outputs an adjustment amount or a clock difference $\Delta\tau_{clk}$ by using a frequency difference between inputs $f_1$~$f_i$, $\Delta\Phi_i$, and a first delay amount and by using a transfer function, a convolution formula, or the like, to adjust a local clock of the second device. The first delay amount is associated with a geometric distance between the first apparatus and the second apparatus, and the geometric distance may be a distance of signal propagation between the first apparatus and the second apparatus. The first delay amount may be a geometric delay amount $\Delta\tau_{g_12}$. An operation speed can be increased by considering the first delay amount.

The following describes the time synchronization method in this application with reference to a specific procedure of interaction between the first device and the second device.

FIG. 4 is a diagram of implementing time synchronization between a first device and a second device based on an interference measurement technology according to this application. The method is applicable to a case in which a geometric distance between the first device and the second device is known, and includes the following steps.

S210: The first device sends a second multi-carrier signal to the second device, where the second multi-carrier signal includes at least two subcarriers, for example, the second multi-carrier signal includes subcarriers $f_1$~$f_i$, where i is a positive integer greater than or equal to 2.

Optionally, before step S210, the first device sends indication information to the second device, where the indication information indicates to perform time synchronization between the first device and the second device.

In another implementation, the first device may send, to the second device, an indication information packet used for time synchronization and interference measurement. The indication information packet may include indication information and a parameter used for interference measurement. The indication information indicates to perform time synchronization between the first device and the second device. The parameter used for interference measurement may include a time synchronization periodicity, a signal parameter, or the like. The time synchronization periodicity specifies a

periodicity of one time synchronization operation. The signal parameter includes a center frequency, a frequency difference, a quantity of frequencies, or the like, and specifies that the first device sends a multi-carrier signal feature to the second device and the second device receives a multi-carrier signal feature. In this application, the first device and the second device may alternatively obtain the foregoing parameters through local presetting or the like. This application is not limited thereto. By sending the indication information packet, a time synchronization process can be standardized and resource allocation can be optimized.

S220: The first device sends first information to the second device, where the first information indicates phases $\Phi_1$ to $\Phi_i$ that correspond to the subcarriers $f_1$~$f_i$ included in the second multi-carrier signal and that are locally obtained by the first device through analysis.

In an implementation, the first information directly indicates the phases $\Phi_1$ to $\Phi_i$ that correspond to the subcarriers $f_1$~$f_i$ included in the second multi-carrier signal and that are locally obtained by the first device through analysis.

In another implementation, the first information directly indicates the phases $\Phi_1$ to $\Phi_i$ that correspond to the subcarriers $f_1$~$f_i$ included in the second multi-carrier signal and that are locally obtained by the first device through analysis, and time information locally corresponding to the second multi-carrier signal on the first device.

In another implementation, the first information indicates time information locally corresponding to the second multi-carrier signal on the first device, and the second device uses the time information corresponding to the second multi-carrier signal to infer the phases $\Phi_1$ to $\Phi_i$ that correspond to the subcarriers $f_1$~$f_i$ included in the second multi-carrier signal and that are locally obtained by the first device through analysis.

S230: The second device receives a first multi-carrier signal, and locally obtains, through analysis, phases $\Phi'_1$ to $\Phi'_i$ corresponding to subcarriers included in the first multi-carrier signal and frequencies $f_1$~$f_i$ corresponding to the subcarriers, where the first multi-carrier signal is a signal that is after the second multi-carrier signal sent by the first device is propagated between channels.

S240: The second device performs time synchronization with the first device based on a difference between the phases locally obtained by each of the first device and the second device, for example, $\Delta\Phi_i$ obtained through $\Phi'_i$-$\Phi_i$, and a frequency difference between the subcarriers $f_1$~$f_i$ included in the second multi-carrier signal.

A manner in which the second device performs time synchronization with the first device may be as follows:

Manner a: The second device directly outputs an adjustment amount or a clock difference $\Delta\tau_{clk}$ by inputting the frequency difference between the subcarriers $f_1$~$f_i$ and $\Delta\Phi_i$ and by using a transfer function, a convolution formula, or the like, to adjust a local clock of the second device, so that the first device and the second device are time-synchronized.

Manner b: The second device obtains, based on a first delay amount associated with the geometric distance between the first device and the second device, a local clock $\Delta\tau_{clk}$ by inputting the frequency difference between the subcarriers $f_1$~$f_i$ and $\Delta\Phi_i$ and by using a transfer function, a convolution formula, or the like, to adjust a local clock of the second device, so that the first device and the second device are time-synchronized. The first delay amount may be a geometric delay amount $\Delta\tau_{g_12}$.

Manner c: A first delay amount corresponding to the geometric distance between the first device and the second device is a geometric delay $\Delta\tau_{g_12}$. When the geometric delay is known, the second device obtains a first adjustment amount $\Delta\tau_{12}$=$\Delta\tau_{g_12}$+$\Delta\tau_{clk}$+$n_1\tau_r$ according to a formula $\Delta\tau_{12} = \frac{\Delta\Phi_1 - \Delta\Phi_2}{2\pi(f_1 - f_2)}$. After deducting the known geometric delay $\Delta\tau_{g_12}$ from the first adjustment amount and eliminating an integer periodicity ambiguity, the second device may calculate a clock difference $\Delta\tau_{clk}$=$\Delta\tau_{12}$-$\Delta\tau_{g_12}$, and adjust a local clock of the second device based on the clock difference $\Delta\tau_{clk}$, for example, may adjust the local clock to $t_{clk2}$-$\Delta\tau_{clk}$, so that the first device and the second device are time-synchronized.

It should be understood that, in the foregoing calculation, a manner of calculating both the frequency difference between the subcarriers $f_1$~$f_i$ and the phase difference between the phases $\Delta\Phi_1$~$\Delta\Phi_i$ by using the corresponding difference between the first multi-carrier signal and the second multi-carrier signal is used as an example for description. A specific calculation method and positive/negativeness thereof are determined according to an actual situation. For example, $t_{clk1}$ - $t_{clk2}$ = $\Delta_{\tau clk}$, or $t_{clk2}$ - $t_{clk1}$ = $\Delta\tau_{clk}$.

It should be understood that information transmitted by the first multi-carrier signal is not specifically limited in this application. In addition, a form of a specific signal carried by the first information is not specifically limited in this application. In a possible implementation, the first information is carried in the second multi-carrier signal.

When the geometric distance between the first device and the second device is unknown, this application provides a two-way measurement method, so that the geometric delay $\Delta\tau_{g_12}$ can be further eliminated, and the clock difference is calculated by using a signal delay difference.

The second apparatus adjusts a clock of the second apparatus based on the locally obtained phases corresponding to the first multi-carrier signal, the locally obtained phases corresponding to the second multi-carrier

signal, and a frequency difference of the first multi-carrier signal, so that the second apparatus and the first apparatus are time-synchronized. This can implement high-precision time synchronization between apparatuses, and avoid using an expensive high-stability atomic clock, thereby reducing costs.

FIG. 5 is a diagram of a method for eliminating a geometric delay difference by using a two-way measurement method according to this application. The method includes the following steps.

S311: A second device sends a third multi-carrier signal to a first device, where the third multi-carrier signal includes subcarriers $f_{21}$~$f_{2i}$, and i is a positive integer greater than or equal to 2.

S312: The second device sends second information to the first device, where the second information indicates phases $\Phi_{21}$ to $\Phi_{2i}$ that correspond to subcarriers $f_{21}$~$f_{2i}$ included in a second multi-carrier signal and that are locally obtained by the second device through analysis.

In an implementation, the second information directly indicates phases $\Phi_{21}$ to $\Phi_{2i}$ that correspond to the subcarriers $f_{21}$~$f_{2i}$ included in the third multi-carrier signal and that are locally obtained by the first device through analysis.

In another implementation, the first information directly indicates phases $\Phi_{21}$ to $\Phi_{2i}$ that correspond to the subcarriers $f_{21}$~$f_{2i}$ included in the third multi-carrier signal and that are locally obtained by the first device through analysis, and time information locally corresponding to the third multi-carrier signal on the first device.

In another implementation, the first information indicates time information locally corresponding to the third multi-carrier signal on the first device, and the second device uses the time information corresponding to the third multi-carrier signal to infer phases $\Phi_{21}$ to $\Phi_{2i}$ that correspond to the subcarriers $f_{21}$~$f_{2i}$ included in the third multi-carrier signal and that are locally obtained by the first device through analysis.

S320: The first device obtains a second adjustment amount based on the received third multi-carrier signal that is propagated between channels and the second information. The second adjustment amount may be as follows: Based on an interference measurement technology, the phases locally obtained by the first device through analysis are differentiated from the phases locally obtained by the second device through analysis, for example, $\Delta\Phi_{2i}$ is obtained through $\Phi'_{21}$-$\Phi'_{2i}$, and a signal delay difference $\Delta\tau_{21}=\Delta\tau_{g_12} - \Delta\tau_{clk} + n_2\tau_r$ is calculated based on a frequency difference between the subcarriers $f_{21}$~$f_{2i}$ and $\Delta\Phi_{21}$~$\Delta\Phi_{2i}$.

S331: The first device sends a fourth multi-carrier signal to the second device, where the fourth multi-carrier signal includes subcarriers $f_{31}$~$f_{3i}$, and i is a positive integer greater than or equal to 2.

S332: The first device sends third information to the second device, where the third information indicates phases $\Phi_{31}$ to $\Phi_{3i}$ that correspond to the subcarriers $f_{31}$~$f_{3i}$ included in the fourth multi-carrier signal and that are locally obtained by the first device through analysis.

In an implementation, the second information directly indicates the phases $\Phi_{31}$ to $\Phi_{3i}$ that correspond to the subcarriers $f_{31}$~$f_{3i}$ included in the fourth multi-carrier signal and that are locally obtained by the first device through analysis.

In another implementation, the first information directly indicates the phases $\Phi_{31}$ to $\Phi_{3i}$ that correspond to the subcarriers $f_{31}$~$f_{3i}$ included in the fourth multi-carrier signal and that are locally obtained by the first device through analysis, and time information locally corresponding to the fourth multi-carrier signal on the first device.

In another implementation, the first information indicates time information locally corresponding to the fourth multi-carrier signal on the first device, and the second device uses the time information corresponding to the fourth multi-carrier signal to infer the phases $\Phi_{21}$ to $\Phi_{2i}$ that correspond to the subcarriers $f_{21}$~$f_{2i}$ included in the fourth multi-carrier signal and that are locally obtained by the first device through analysis.

S340: The second device obtains a third adjustment amount based on the received fourth multi-carrier signal that is propagated between channels and the third information. The third adjustment amount may be as follows: Based on an interference measurement technology, the phases locally obtained by the first device through analysis are differentiated from the phases locally obtained by the second device through analysis, for example, $\Delta\Phi_{3i}$ is obtained through $\Phi'_{31}$-$\Phi'_{3i}$, and a signal delay difference $\Delta\tau'_{12} = \Delta\tau_{g_12} + \Delta\tau_{clk} + n_1\tau_r$ is calculated based on a frequency difference between the subcarriers $f_{31}$~$f_{3i}$ and $\Delta\Phi_{31}$~$\Delta\Phi_{3i}$.

In a manner of eliminating a geometric delay, in step S350, the first device adjusts a local clock $t_{clk1}$ based on the second adjustment amount $\Delta\tau_{21}=\Delta\tau_{g_12} - \Delta\tau_{clk}+n_2\tau_r$; the steps shown in FIG. 3 are performed; and the second device adjusts the local clock $t_{clk2}$ based on the signal delay $\Delta\tau_{12} = \Delta\tau_{g_12} + \Delta\tau_{clk} + n_1\tau_r$ and the third adjustment amount $\Delta\tau'_{12} = \Delta\tau_{g_12} + \Delta\tau_{clk} + n_1\tau_r$ that are obtained by performing the steps shown in FIG. 3 by using the interference measurement method. By way of example but not limitation, the local clock of the first device is adjusted to $t_{clk1} - \frac{\Delta\tau_{21}}{2}$, and the local clock of the second device is adjusted to $t_{clk2} + \frac{\Delta\tau'_{12}}{2} - \Delta\tau_{12}$. In this case, a difference between the local clock of the first device and the local clock of the second device is $t'_{clk1} - t'_{clk2} = (t_{clk1} - t_{clk2}) - \left(\frac{\Delta\tau_{21}}{2} + \frac{\Delta\tau'_{12}}{2}\right) + \Delta\tau_{12} = (t_{clk1} - t_{clk2}) - \Big[\Delta\tau_{g_{12}} +$

$\left(\frac{n_1\tau_r+n_2\tau_r}{2}\right)\Big] + \Delta\tau_{g_12} - \Delta\tau_{\mathrm{clk}} + n_2\tau_r = (\mathrm{t_{clk1}} - \mathrm{t_{clk2}}) - \Delta\tau_{\mathrm{clk}} + \frac{n_2\tau_r - n_1\tau_r}{2}$. After the integer periodicity ambiguities $n_1\tau_r$ and $n_2\tau_r$ are eliminated through calculation value restriction, the difference between the local clock of the first device and the local clock of the second device is $t'_{clk1} - t'_{clk2} = (t_{clk1} - t_{clk2}) - \Delta\tau_{clk} = 0$, and the first device and the second device are time-synchronized.

In this manner, a geometric delay $\Delta\tau_{g_12}$ corresponding to a two-site distance between the first device and the second device may be eliminated, so as to implement time synchronization between the first device and the second device with high precision, low costs, and low complexity.

The signal delay difference is calculated by using a local correlation-based interference measurement method, that is, the first device and the second device each locally obtain the phases of the first multi-carrier signal through analysis, and then calculate the delay difference. During two-way measurement, the delay difference is calculated by using the local correlation-based interference measurement method, so that a system error caused by a device response time of the first device and the second device can be eliminated, thereby improving measurement precision of a geometric delay.

Further, step S311 and step S331 may be performed in parallel, that is, the first device and the second device send the third multi-carrier signal and the fourth multi-carrier signal to each other at an agreed time. Further, step S311 in which the second device sends the second information and step S331 in which the first device sends the third information are performed in parallel. More further, working modes of the first device and the second device are full-duplex modes, so that the response time of the first device and the second device can be further offset, thereby improving precision of time synchronization.

It should be understood that information transmitted by the third multi-carrier signal and the fourth multi-carrier signal is not specifically limited in this application. In addition, forms of signals carried in the second information and the third information are not specifically limited in this application. In a possible implementation, the second information is carried in the third multi-carrier signal. In a possible implementation, the third information is carried in the fourth multi-carrier signal.

It should be understood that a sequence of the steps is not limited in this application, and a specific sequence should be determined based on a specific application environment and a design.

FIG. 6 is a diagram of another method for eliminating a geometric delay difference by using a two-way measurement method according to this application. The method includes the following steps.

S411, S412, S420, S431, S432, and S440 respectively correspond to steps S311, S312, S320, S331, S332, and S340 in FIG. 5, and details are not described herein again.

In a manner of eliminating a geometric delay:

In step S450, the first device sends fourth information to the second device, where the fourth information indicates the second adjustment amount.

In addition, the steps shown in FIG. 3 are performed; and the second device adjusts the local clock $t_{clk2}$ based on the signal delay $\Delta\tau_{12}=\Delta\tau_{g_12}+\Delta\tau_{clk}+n_1\tau_r$, the second adjustment amount $\Delta\tau_{21}=\Delta\tau_{g_12}-\Delta\tau_{clk}+n_2\tau_r$, and the third adjustment amount $\Delta\tau'_{12} = \Delta\tau_{g_12} + \Delta\tau_{clk} + n_1\tau_r$ that are obtained by performing the steps shown in FIG. 3 by using the interference measurement method. By way of example but not limitation, the local clock of the second device may be adjusted to $\mathrm{t_{clk2}} - (\Delta\tau_{12} - \frac{\Delta\tau'_{12}+\Delta\tau_{21}}{2}$. In this case, a difference between the local clock of the first device and the local clock of the second device is $\mathrm{t'_{clk1}} - \mathrm{t'_{clk2}} = (\mathrm{t_{clk1}} - \mathrm{t_{clk2}}) - \left(\frac{\Delta\tau_{21}}{2} + \frac{\Delta\tau'_{12}}{2}\right) + \Delta\tau_{12} = (\mathrm{t_{clk1}} - \mathrm{t_{clk2}}) - \left[\Delta\tau_{g_{12}} + \left(\frac{n_1\tau_r+n_2\tau_r}{2}\right)\right] + \Delta\tau_{g_{12}} - \Delta\tau_{\mathrm{clk}} + n_2\tau_r\tau_r = (\mathrm{t_{clk1}} - \mathrm{t_{clk2}}) - \Delta\tau_{\mathrm{clk}} + \frac{n_2\tau_r - n_1\tau_r}{2}$. After the integer periodicity ambiguities $n_1\tau_r$ and $n_2\tau_r$ are eliminated through calculation value restriction, the difference between the local clock of the first device and the local clock of the second device is $t'_{clk1} - t'_{clk2} = (t_{clk1} - t_{clk2}) - \Delta\tau_{clk} = 0$, and the first device and the second device are time-synchronized.

In this manner, a geometric delay $\Delta\tau_{g_12}$ corresponding to a two-site distance between the first device and the second device may be eliminated, so as to implement time synchronization between the first device and the second device with high precision, low costs, and low complexity.

The signal delay difference is calculated by using a local correlation-based interference measurement method, that is, the first device and the second device each locally obtain the phases of the first multi-carrier signal through analysis, and then calculate the delay difference. During two-way measurement, the delay difference is calculated by using the local correlation-based interference measurement method, so that a system error caused by a device response time of the first device and the second device can be eliminated, thereby improving measurement precision of a geometric delay.

During actual application, when a two-site distance between the first device and the second device is unknown, in

this application, a geometric delay $\Delta\tau_{g_12}$ corresponding to the two-site distance between the first device and the second device may be eliminated by performing the steps shown in FIG. 5 and/or FIG. 6, and a clock difference $\Delta\tau_{clk}$ between the first device and the second device is calculated by performing the steps shown in FIG. 4 a plurality of times, so as to implement time synchronization between the first device and the second device. It should be understood that a quantity of times and a sequence of implementing FIG. 5 and/or FIG. 6 and FIG. 4 are not limited in a specific implementation. Therefore, in this application, a two-site geometric delay and clock difference between the first device and the second device may be eliminated in real time in a closed-loop manner, to implement high-precision time synchronization.

It should be understood that the algorithms of the phase difference, the frequency difference, the clock difference, the delay amount, and the adjustment amount in the foregoing descriptions are schematic descriptions for ease of understanding, and a specific calculation method and positive/negativeness thereof are determined according to an actual situation.

FIG. 7 is a schematic flowchart of implementing time synchronization based on an interference measurement technology according to this application.

The method includes the following steps.

A first device sends an indication information packet to a second device. The indication information packet includes indication information and a parameter used for interference measurement. The indication information indicates performing time synchronization between the first device and the second device. The parameter used for interference measurement may include a time synchronization periodicity, a signal parameter, or the like.

Two-way measurement eliminates a geometric delay by performing the following steps a plurality of times:

S511, S512, S520, S531, S532, and S540 that respectively correspond to steps S411, S412, S420, S431, S432, and S440 in FIG. 5, where details are not described herein again; and/or
the steps shown in FIG. 6, to eliminate a geometric delay $\Delta\tau_{g_12}$ corresponding to a two-site distance between the first device and the second device.

A signal delay difference is calculated based on an interference measurement technology by performing the following steps a plurality of times:
S531 and S532 that respectively correspond to steps S210 and S220 shown in FIG. 4, where details are not described herein again.

The second device obtains a clock difference $\Delta\tau_{clk}$ based on the adjustment amount obtained in the foregoing step, and adjusts a local clock of the second device, so that the first device and the second device are time-synchronized.

The second device analyzes that the two sites are synchronized at this time, and the second device sends second indication information to the first device, where the second indication information indicates the first device to adjust a structure of a sent signal, so that a multi-carrier signal sent by the first device includes only two subcarriers, and the two subcarriers respectively correspond to discrete frequencies in a spectrum. This saves transmission resources. In another implementation, the second indication information indicates the first device to adjust a structure of a sent signal, so that a multi-carrier signal sent by the first device includes three subcarriers, and the three subcarriers respectively correspond to discrete frequencies in a spectrum. This saves transmission resources and improves stability of time synchronization.

FIG. 8 shows a simulation result of a time synchronization solution according to this application. According to the procedure of implementing time synchronization based on the interference measurement technology shown in FIG. 7, when a bandwidth of a multi-carrier signal is set to 10 Hz, in this application, high-precision estimation may be performed on a clock difference between the first device and the second device at a millisecond-level integral time. Therefore, a high-precision dual-device time synchronization correction value can be generated at a millisecond-level integral time, so as to correct a rapidly changing dual-device clock difference.

In the interference measurement technology, if a used measurement signal includes a plurality of subcarriers, the plurality of subcarriers respectively correspond to discrete frequencies in a spectrum, and a method of selecting a frequency of a measurement signal by using an equal frequency difference is used, excessive frequency resources are consumed, and a calculation amount is also increased.

In this application, a multi-carrier signal feature sent by the first device to the second device may be set, so as to further optimize the technical solution of calculating the signal delay difference based on the interference measurement technology in this application. In this application, the first device may send a multi-carrier signal to the second device, where the signal includes at least three subcarriers, and the three subcarriers respectively correspond to discrete frequencies in a spectrum. There is a first frequency difference between a frequency of a first subcarrier and a frequency of a second subcarrier, and there is a second frequency difference between the frequency of the second subcarrier and a frequency of a third subcarrier. The first frequency difference is greater than the second frequency difference.

A measurement range is inversely proportional to a frequency difference, and in a case of an equal frequency difference, a measurement error during calculation of a signal delay difference increases. Therefore, by setting a signal in this manner, when the signal delay difference is calculated based on an interference measurement technology, the

measurement range (that is, a distance range of the first device and the second device) can be expanded, and the measurement error during calculation of the signal delay difference can also be reduced.

Further, the first frequency difference may be set to an integer multiple of the second frequency difference. For example, when a signal sent by the first device to the second device includes a plurality of subcarriers, a frequency difference between frequencies corresponding to subcarriers in a spectrum may increase in equal proportion, thereby further increasing an operation speed, quickly calculating an ambiguity, and saving frequency resources.

FIG. 9 is a diagram of feature setting of multi-carrier signals sent by a first device and a second device according to this application. As shown in the figure, for example, an integer multiple of the first frequency difference to the second frequency difference is set to 2. A frequency $f_i$ (i is a positive integer greater than or equal to 1) corresponding to each subcarrier in a spectrum may be set to $f_i = f_0 + \frac{1-(-2)^i}{3}\Delta f$, where $f_0$ is a center frequency. Similarly, values $f_i = f_0 - \frac{1-(-2)^i}{3}\Delta f$ of frequencies symmetrical about the center frequency also meet application requirements.

FIG. 10 is another diagram of feature setting of multi-carrier signals sent by a first device and a second device according to this application. As shown in the figure, for example, an integer multiple of the first frequency difference to the second frequency difference is set to 2. A frequency $f_i$ (i is a positive integer greater than or equal to 1) corresponding to each subcarrier in a spectrum may be set to $f_i = f_0 + 2^{i-1}\Delta f$. Similarly, a design of a group of frequencies symmetrical about the center frequency $f_0$ also meet application requirements, and is expressed as $f_i = f_0 - 2^{i-1}\Delta f$. For example, an integer multiple of the first frequency difference to the second frequency difference is set to 2. In the technical solution of calculating the signal delay difference based on the interference measurement technology in this application, for example, when the second device performs differentiation based on phases obtained by the first device and the second device through local two-site analysis, a series of binary exponential sequences, for example, $\{2^{i-1}\}$, where i is a natural number greater than or equal to 1, may be generated, so as to assist in quickly calculating an ambiguity and increasing an operation speed.

In a manner of implementing feature setting of the multi-carrier signals sent by the first device and the second device, a feature of the multi-carrier signals may be set in a pilot signal of an orthogonal frequency division multiplexing (Orthogonal Frequency Division Multiplexing, OFDM for short) technology, and a signal corresponding to the frequency feature in the spectrum is generated by using a plurality of subcarriers.

The manner of performing feature setting of the multi-carrier signals sent by the first device and the second device is applied to the process of implementing time synchronization based on the interference measurement technology shown in FIG. 7 in this application. Because the interference measurement method can be used to implement high-precision estimation of a clock difference between two sites at a millisecond-level integral time, a clock correction value can be generated at a millisecond-level integral time to synchronize clocks of the two sites. Further, a phase noise changes rapidly, and a time synchronization correction operation with a short integral time may track and eliminate a clock difference caused by the phase noise. The time synchronization method provided in this application has a potential to implement wireless time synchronization at a level of 100 ps to 10 ps when a general crystal oscillator is used. Therefore, in this application, high-precision time synchronization between two sites can be implemented with low costs.

In addition, an embodiment of this application further provides an apparatus, and the apparatus may implement the foregoing method. FIG. 11 is a diagram of an apparatus for implementing local device analysis of a multi-carrier signal according to this application. For example, a first device sends a multi-carrier signal to a second device. The first device first generates data; performs steps such as encoding, modulation, and mapping on the data to obtain a digital signal; then performs digital-to-analog conversion (digital-to-analog conversion, DAC) on the generated digital signal to obtain an analog signal; converts a low-medium-frequency analog signal into a high-frequency signal through an up-converter; and amplifies the high-frequency signal through a power amplifier to obtain a to-be-sent valid signal. The first device obtains a sent multi-carrier signal through a local antenna; converts a high-frequency signal into a low-medium-frequency signal by a down-converter; then performs analog-to-digital conversion (analog-to-digital conversion, ADC) on the low-medium-frequency signal to obtain a digital signal; performs step processing such as demodulation and decoding on the digital signal to obtain data; and measures a signal phase by using a signal processing method.

Similarly, the first device may obtain, through a local antenna, a multi-carrier signal that is sent by the second device and that is transmitted between channels; convert a high-frequency signal into a low-medium-frequency signal by a down-converter; then perform ADC on the low-medium-frequency signal to obtain a digital signal; perform step processing such as demodulation and decoding on the digital signal to obtain data; and measure a signal phase by using a signal processing method.

FIG. 12 is a diagram of a communication apparatus for implementing a time synchronization method based on interference measurement according to this application. The apparatus 600 includes: a transceiver module 601 that is configured to communicate with the outside and may also be referred to as a communication interface or a communication unit; and a processing module 602 that is configured to process data.

The apparatus 600 may be configured to perform the actions in FIG. 4 to FIG. 7 that are performed on the first

device side in the foregoing method embodiments. The transceiver module 601 is configured to perform sending and receiving related operations in FIG. 4 to FIG. 7 on the first device side in the foregoing method embodiments. The processing module 602 is configured to perform processing related operations in FIG. 4 to FIG. 7 on the first device side in the foregoing method embodiments.

The apparatus 600 may be configured to perform the actions in FIG. 4 to FIG. 7 that are performed by the second device in the foregoing method embodiments. The transceiver module 601 is configured to perform sending and receiving related operations in FIG. 4 to FIG. 7 on the second device side in the foregoing method embodiments. The processing module 602 is configured to perform processing related operations in FIG. 4 to FIG. 7 on the second device side in the foregoing method embodiments.

FIG. 13 is a diagram of structures of a first device and a second device according to an embodiment of this application.

The first device includes at least one processor 701 and at least one transceiver 703. Optionally, the first device may further include at least one memory 702, at least one output device 704, or at least one input device 705.

The processor 701, the memory 702, and the transceiver 703 are connected through a communication line. The communication line may include a path for transmitting information between the foregoing components.

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. During specific implementation, in an embodiment, the processor 701 may alternatively include a plurality of CPUs, and the processor 701 may be a single-core processor or a multi-core processor. The processor herein may be one or more devices, circuits, or processing cores configured to process data.

The memory 702 may be an apparatus having a storage function. For example, the memory 702 may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disk storage, an optical disk storage (including a compact disc, a laser disc, an optical disc, a digital versatile disc, a Blu-ray disc, or the like), a magnetic disk storage medium or another magnetic storage device, or any other medium that can be configured to carry or store desired program code in a form of instructions or a data structure and that can be accessed by a computer. However, this is not limited thereto. The memory 702 may exist independently, and is connected to the processor 701 through the communication line. Alternatively, the memory 502 may be integrated with the processor 701.

The memory 702 is configured to store computer-executable instructions for executing the solutions of this application, and the processor 701 controls the execution. Specifically, the processor 701 is configured to execute the computer-executable instructions stored in the memory 702, to implement the random access method in the embodiment of this application.

Alternatively, optionally, in this embodiment of this application, the processor 701 may perform processing related functions in the random access method provided in the foregoing embodiment of this application, and the transceiver 703 is responsible for communicating with another device or a communication network. This is not specifically limited in embodiments of this application.

Optionally, the computer-executable instructions in embodiments of this application may also be referred to as application program code or computer program code. This is not specifically limited in embodiments of this application.

The transceiver 703 may use any transceiver-type apparatus, and is configured to communicate with another device or a communication network such as the Ethernet, a RAN, or a wireless local area network (wireless local area network, WLAN). The transceiver 703 includes a transmitter (transmitter, Tx) and a receiver (receiver, Rx).

The output device 704 communicates with the processor 701, and may display information in a plurality of manners. For example, the output device 704 may be a liquid crystal display (liquid crystal display, LCD), a light emitting diode (light emitting diode, LED) display device, a cathode ray tube (cathode ray tube, CRT) display device, or a projector (projector).

The input device 705 communicates with the processor 701, and may receive an input of a user in a plurality of manners. For example, the input device 505 may be a mouse, a keyboard, a touchscreen device, or a sensing device.

The second device includes at least one processor 801, at least one transceiver 803, and at least one network interface 804. Optionally, the second device may further include at least one memory 802. The processor 801, the memory 802, the transceiver 803, and the network interface 804 are connected through a communication line. The network interface 804 is configured to connect to a core network device through a link (for example, an S1 interface), or connect to a

network interface of another second device through a wired or wireless link (for example, an X2 interface) (not shown in FIG. 13). This is not specifically limited in embodiments of this application. In addition, for related descriptions of the processor 801, the memory 802, and the transceiver 803, refer to the descriptions of the processor 801, the memory 802, and the transceiver 803 in the first device. Details are not described herein again.

In addition, an embodiment of this application further provides a chip. The chip obtains instructions and executes the instructions to implement the foregoing methods.

Optionally, in an implementation, the chip includes a processor and a communication interface. The processor reads, through the communication interface, instructions stored in a memory, to perform the foregoing methods.

Optionally, in an implementation, the chip may further include a memory. The memory stores instructions, the processor is configured to execute the instructions stored in the memory. When the instructions are executed, the processor is configured to perform the foregoing methods.

An embodiment of this application further provides a computer-readable storage medium. The computer-readable storage medium stores instructions. The instructions are used to implement the methods in the foregoing method embodiments.

An embodiment of this application further provides a computer program product including instructions. The instructions are used to implement the methods in the foregoing method embodiments.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by using electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit

the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A time synchronization method, comprising steps of:

detecting, by a second apparatus, a first multi-carrier signal to determine a first phase and a second phase of the first multi-carrier signal, wherein the first multi-carrier signal is a signal that is after a second multi-carrier signal sent by a first apparatus is propagated between channels, and the first multi-carrier signal comprises at least two subcarriers;
receiving, by the second apparatus, first information, wherein the first information indicates a third phase and a fourth phase that correspond to the second multi-carrier signal; and
performing, by the second apparatus, time synchronization with the first apparatus based on a first phase difference, a second phase difference, and a first frequency difference, wherein the first phase difference is a phase difference between the first phase and the third phase, the second phase difference is a phase difference between the second phase and the fourth phase, and the first frequency difference is a frequency difference corresponding to the first multi-carrier signal.

2. The method according to claim 1, wherein the performing, by the second apparatus, time synchronization with the first apparatus based on a first phase difference, a second phase difference, and a first frequency difference comprises:

performing, by the second apparatus, time synchronization of the second apparatus based on a first adjustment amount, wherein the first adjustment amount $\Delta\tau$ meets the following condition:

$$\Delta\tau = \frac{\Delta\Phi_1 - \Delta\Phi_2}{2\pi\Delta f},$$

wherein
$\Delta\Phi_1$ represents the first phase difference, $\Delta\Phi_2$ represents the second phase difference, and $\Delta f$ represents the first frequency difference.

3. The method according to claim 1, wherein the performing, by the second apparatus, time synchronization with the first apparatus based on a first phase difference, a second phase difference, and a first frequency difference between the first signal and the second signal comprises:
performing, by the second apparatus, time synchronization with the first apparatus based on the first phase difference, the second phase difference, the first frequency difference, and a first delay amount, wherein the first delay amount is associated with a geometric distance between the first apparatus and the second apparatus.

4. The method according to claim 3, wherein the performing, by the second apparatus, time synchronization with the first apparatus based on the first phase difference, the second phase difference, the first frequency difference, and a first delay amount comprises:

performing, by the second apparatus, time synchronization of the second apparatus based on a first adjustment amount, wherein the first adjustment amount meets the following condition:

$$\Delta\tau = \frac{\Delta\Phi_1 - \Delta\Phi_2}{2\pi\Delta f} - \Delta\tau_{g_12},$$

wherein
$\Delta\Phi_1$ represents the first phase difference, $\Delta\Phi_2$ represents the second phase difference, $\Delta f$ represents the first frequency difference, and $\Delta\tau_{g_12}$ represents the first delay amount.

5. The method according to any one of claims 1 to 4, wherein before the detecting, by a second apparatus, a first multi-carrier signal, the method further comprises:

sending, by the second apparatus, a third multi-carrier signal;
sending, by the second apparatus, second information, wherein the second information indicates a fifth phase and a sixth phase that correspond to the third multi-carrier signal, and the third multi-carrier signal and the second information are used by the first apparatus to adjust a local clock;
detecting, by the second apparatus, a fourth multi-carrier signal to determine a seventh phase and an eighth phase of the fourth multi-carrier signal, wherein the fourth multi-carrier signal is a signal that is after a fifth multi-carrier signal sent by the first apparatus is propagated between channels;
receiving, by the second apparatus, third information, wherein the third information indicates a ninth phase and a tenth phase that correspond to the fifth multi-carrier signal; and
adjusting, by the second apparatus, a local clock based on a third phase difference, a fourth phase difference, and a second frequency difference, wherein the third phase difference is a phase difference between the seventh phase and the ninth phase, the fourth phase difference is a phase difference between the eighth phase and the tenth phase, and the second frequency difference is a frequency difference corresponding to the fourth multi-carrier signal.

**6.** The method according to any one of claims 1 to 4, wherein before the detecting, by a second apparatus, a first multi-carrier signal, the method further comprises:

sending, by the second apparatus, a third multi-carrier signal;
sending, by the second apparatus, second information, wherein the second information indicates a fifth phase and a sixth phase that correspond to the third multi-carrier signal, and the third multi-carrier signal and the second information are used by the first apparatus to determine a second adjustment amount;
detecting, by the second apparatus, a fourth multi-carrier signal to determine a seventh phase and an eighth phase of the fourth multi-carrier signal, wherein the fourth multi-carrier signal is a signal that is after a fifth multi-carrier signal sent by the first apparatus is propagated between channels;
receiving, by the second apparatus, third information, wherein the third information indicates a ninth phase and a tenth phase that correspond to the fifth multi-carrier signal;
determining, by the second apparatus, a third adjustment amount based on a third phase difference, a fourth phase difference, and a second frequency difference, wherein the third phase difference is a phase difference between the seventh phase and the ninth phase, the fourth phase difference is a phase difference between the eighth phase and the tenth phase, and the second frequency difference is a frequency difference corresponding to the fourth multi-carrier signal;
receiving, by the second apparatus, fourth information, wherein the fourth information indicates the second adjustment amount; and
adjusting, by the second apparatus, a local clock based on the second adjustment amount and the third adjustment amount.

**7.** The method according to claim 5 or 6, wherein parallel transmission is performed on the third multi-carrier signal and the fifth multi-carrier signal.

**8.** The method according to claim 7, wherein the second information and the third information are sent in parallel.

**9.** The method according to any one of claims 1 to 6, wherein the first information specifically indicates the third phase and the fourth phase that correspond to the second multi-carrier signal, and time information corresponding to the third phase and the fourth phase.

**10.** The method according to any one of claims 1 to 9, wherein the first multi-carrier signal comprises a first subcarrier, a second subcarrier, and a third subcarrier, the first subcarrier, the second subcarrier, and the third subcarrier respectively correspond to different frequencies, a frequency difference between the first subcarrier and the second subcarrier corresponds to a third frequency difference, a frequency difference between the second subcarrier and the third subcarrier corresponds to a fourth frequency difference, and the third frequency difference is greater than the fourth frequency difference.

**11.** The method according to claim 10, wherein the first frequency difference is K times the third frequency difference, and K is a positive integer.

**12.** The method according to claim 11, wherein K is 2.

**13.** A time synchronization method, comprising steps of:

sending, by a first apparatus, a second multi-carrier signal; and
sending, by the first apparatus, first information, wherein the first information indicates a third phase and a fourth phase that correspond to the second multi-carrier signal, and the second multi-carrier signal and the first information are used by a second apparatus to adjust a local clock.

**14.** The method according to claim 13, wherein before the sending, by a first apparatus, a second multi-carrier signal, the method further comprises:

detecting, by the first apparatus, a sixth multi-carrier signal to determine an eleventh phase and a twelfth phase that correspond to the sixth multi-carrier signal, wherein the sixth multi-carrier signal is a signal that is after a third multi-carrier signal sent by the second apparatus is propagated between channels;
receiving, by the first apparatus, second information, wherein the second information indicates a fifth phase and a sixth phase that correspond to the third multi-carrier signal;
adjusting, by the first apparatus, a local clock based on a fifth phase difference, a sixth phase difference, and a fifth frequency difference, wherein the fifth phase difference is a phase difference between the eleventh phase and the fifth phase, the sixth phase difference is a phase difference between the twelfth phase and the sixth phase, and the fifth frequency difference is a frequency difference corresponding to the sixth multi-carrier signal;
sending, by the first apparatus, a fifth multi-carrier signal; and
sending, by the first apparatus, third information, wherein the third information indicates a ninth phase and a tenth phase that correspond to the fifth multi-carrier signal, and the fifth multi-carrier signal and the third information are used by the second apparatus to adjust the local clock.

**15.** The method according to claim 13, wherein before the sending, by a first apparatus, a second multi-carrier signal, the method further comprises:

detecting, by the first apparatus, a sixth multi-carrier signal to determine an eleventh phase and a twelfth phase that correspond to the sixth multi-carrier signal, wherein the sixth multi-carrier signal is a signal that is after a third multi-carrier signal sent by the second apparatus is propagated between channels;
receiving, by the first apparatus, second information, wherein the second information indicates a fifth phase and a sixth phase that correspond to the third multi-carrier signal;
obtaining, by the first apparatus, a second adjustment amount based on a fifth phase difference, a sixth phase difference, and a fifth frequency difference, wherein the fifth phase difference is a phase difference between the eleventh phase and the fifth phase, the sixth phase difference is a phase difference between the twelfth phase and the sixth phase, and the fifth frequency difference is a frequency difference corresponding to the sixth multi-carrier signal;
sending, by the first apparatus, fourth information, wherein the fourth information indicates the second adjustment amount, and the second adjustment amount is used by the second apparatus to adjust the local clock;
sending, by the first apparatus, a fifth multi-carrier signal; and
sending, by the first apparatus, third information, wherein the third information indicates a ninth phase and a tenth phase that correspond to the fifth multi-carrier signal, and the fifth multi-carrier signal and the third information are used by the second apparatus to adjust the local clock.

**16.** The method according to any one of claims 13 to 15, wherein the first multi-carrier signal comprises a first subcarrier, a second subcarrier, and a third subcarrier, the first subcarrier, the second subcarrier, and the third subcarrier respectively correspond to different frequencies, a frequency difference between the first subcarrier and the second subcarrier corresponds to a third frequency difference, a frequency difference between the second subcarrier and the third subcarrier corresponds to a fourth frequency difference, and the third frequency difference is greater than the fourth frequency difference.

**17.** The method according to claim 16, wherein the first frequency difference is K times the third frequency difference, and K is a positive integer.

**18.** The method according to claim 17, wherein K is 2.

**19.** A communication apparatus, configured to perform the method according to any one of claims 1 to 12, and comprising a transceiver module and a signal processing module.

**20.** A communication apparatus, configured to perform the method according to any one of claims 13 to 18, and comprising a transceiver module and a signal processing module.

**21.** A chip, comprising a processor, wherein the processor is connected to a memory, the memory is configured to store a computer program, and the processor is configured to execute the computer program stored in the memory, to enable the chip to perform the method according to any one of claims 1 to 18.

**22.** A computer-readable storage medium, wherein the storage medium stores a computer program or instructions, and when the computer program or the instructions are executed by a processor, the method according to any one of claims 1 to 18 is implemented.

**23.** A computer product, wherein when the computer product runs on a computer, the method according to any one of claims 1 to 18 is performed.

**24.** A communication system, comprising a terminal device and a network device, wherein the terminal device is configured to perform the method according to any one of claims 1 to 12, and the network device is configured to perform the method according to any one of claims 13 to 18.

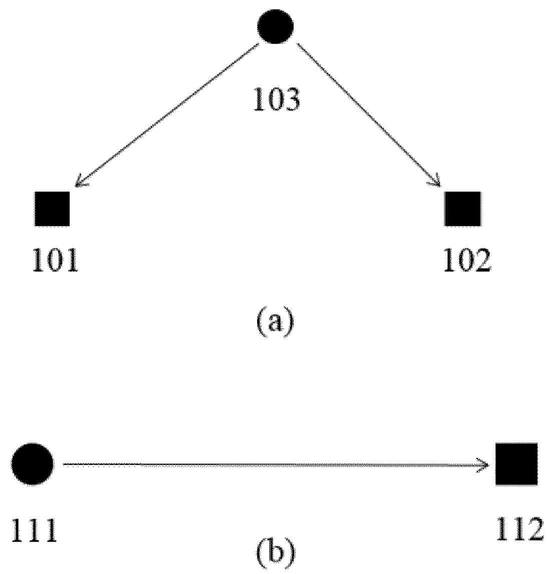


FIG. 1

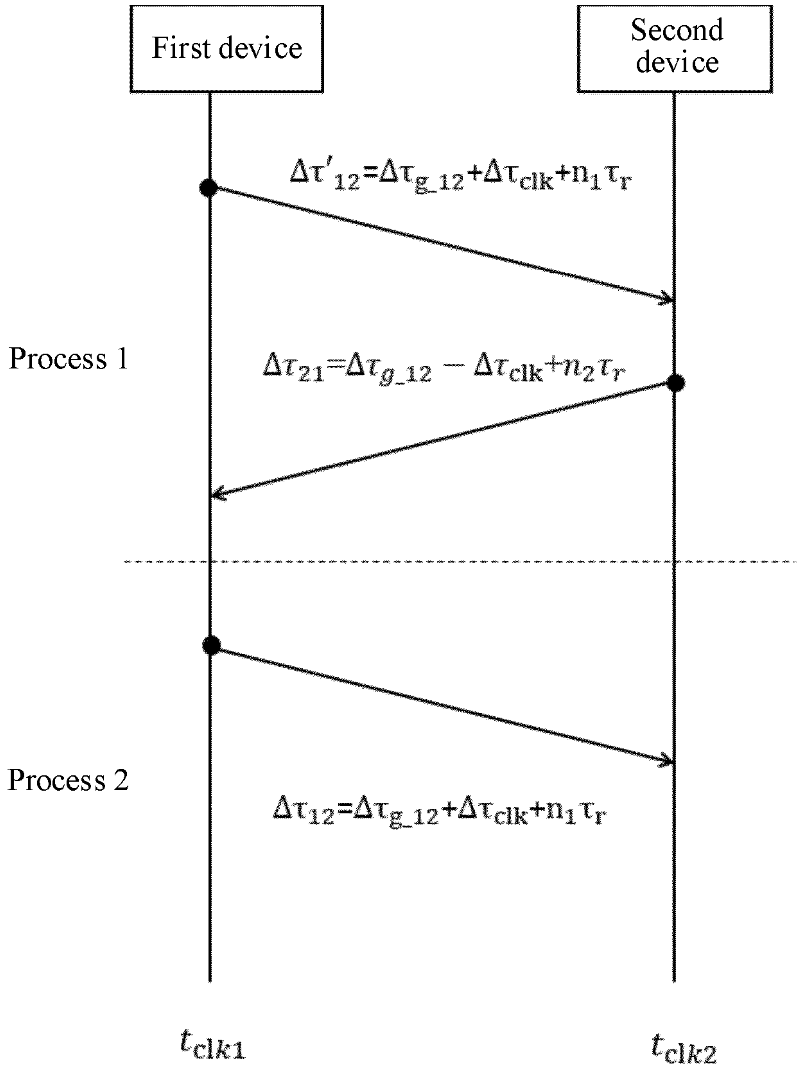
First device
Second device
$\Delta\tau'_{12}=\Delta\tau_{g_12}+\Delta\tau_{clk}+n_1\tau_r$
Process 1
$\Delta\tau_{21}=\Delta\tau_{g_12}-\Delta\tau_{clk}+n_2\tau_r$
Process 2
$\Delta\tau_{12}=\Delta\tau_{g_12}+\Delta\tau_{clk}+n_1\tau_r$
$t_{clk1}$
$t_{clk2}$

FIG. 2

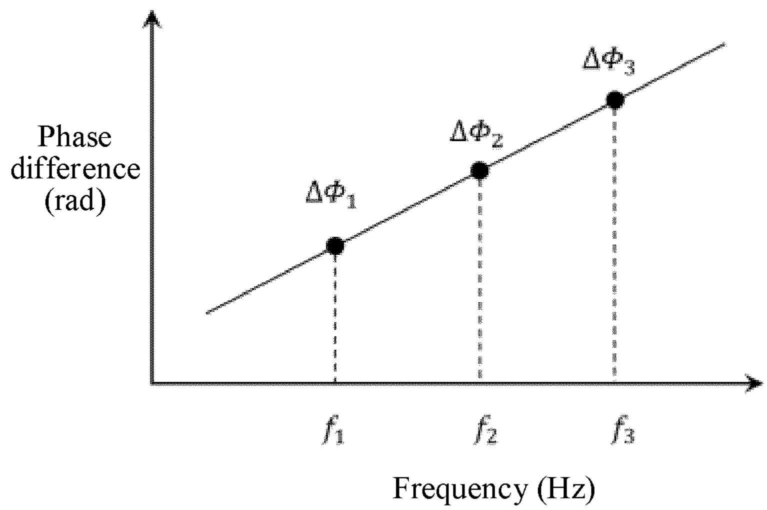
Phase difference (rad)
$\Delta\Phi_1$
$\Delta\Phi_2$
$\Delta\Phi_3$
$f_1$
$f_2$
$f_3$
Frequency (Hz)

FIG. 3

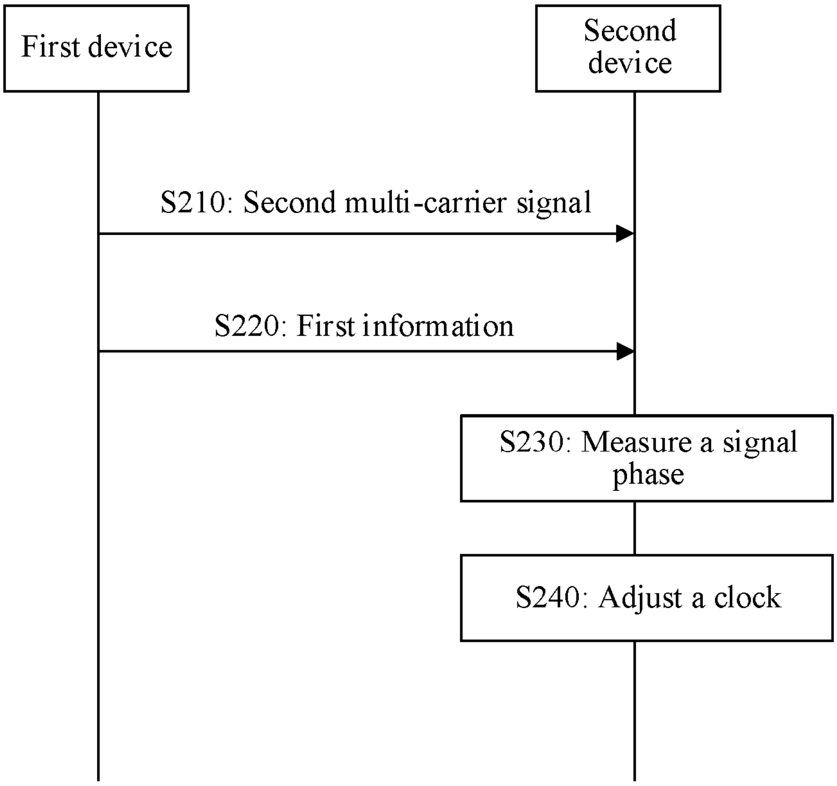
First device
Second device
S210: Second multi-carrier signal
S220: First information
S230: Measure a signal phase
S240: Adjust a clock

FIG. 4

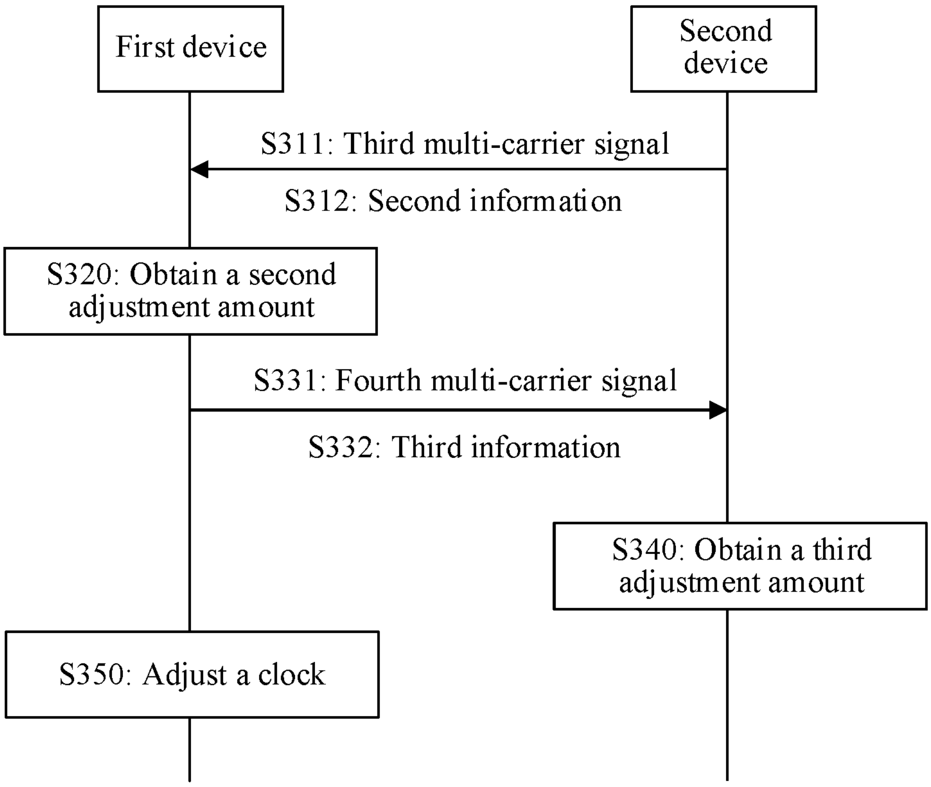
First device
Second device
S311: Third multi-carrier signal
S312: Second information
S320: Obtain a second adjustment amount
S331: Fourth multi-carrier signal
S332: Third information
S340: Obtain a third adjustment amount
S350: Adjust a clock

FIG. 5

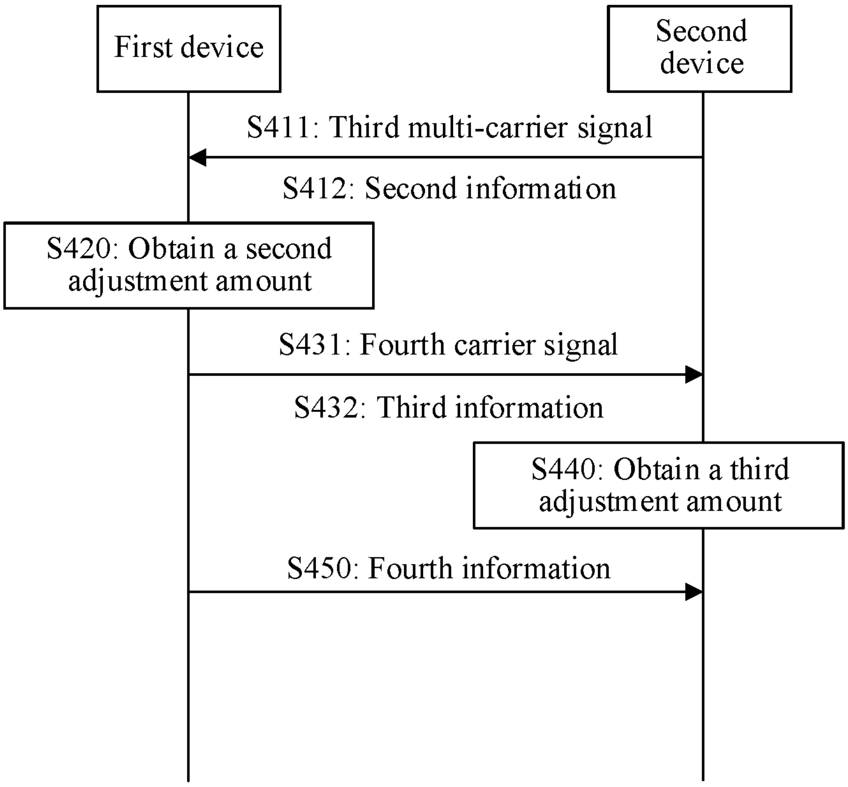
First device
Second device
S411: Third multi-carrier signal
S412: Second information
S420: Obtain a second adjustment amount
S431: Fourth carrier signal
S432: Third information
S440: Obtain a third adjustment amount
S450: Fourth information

FIG. 6

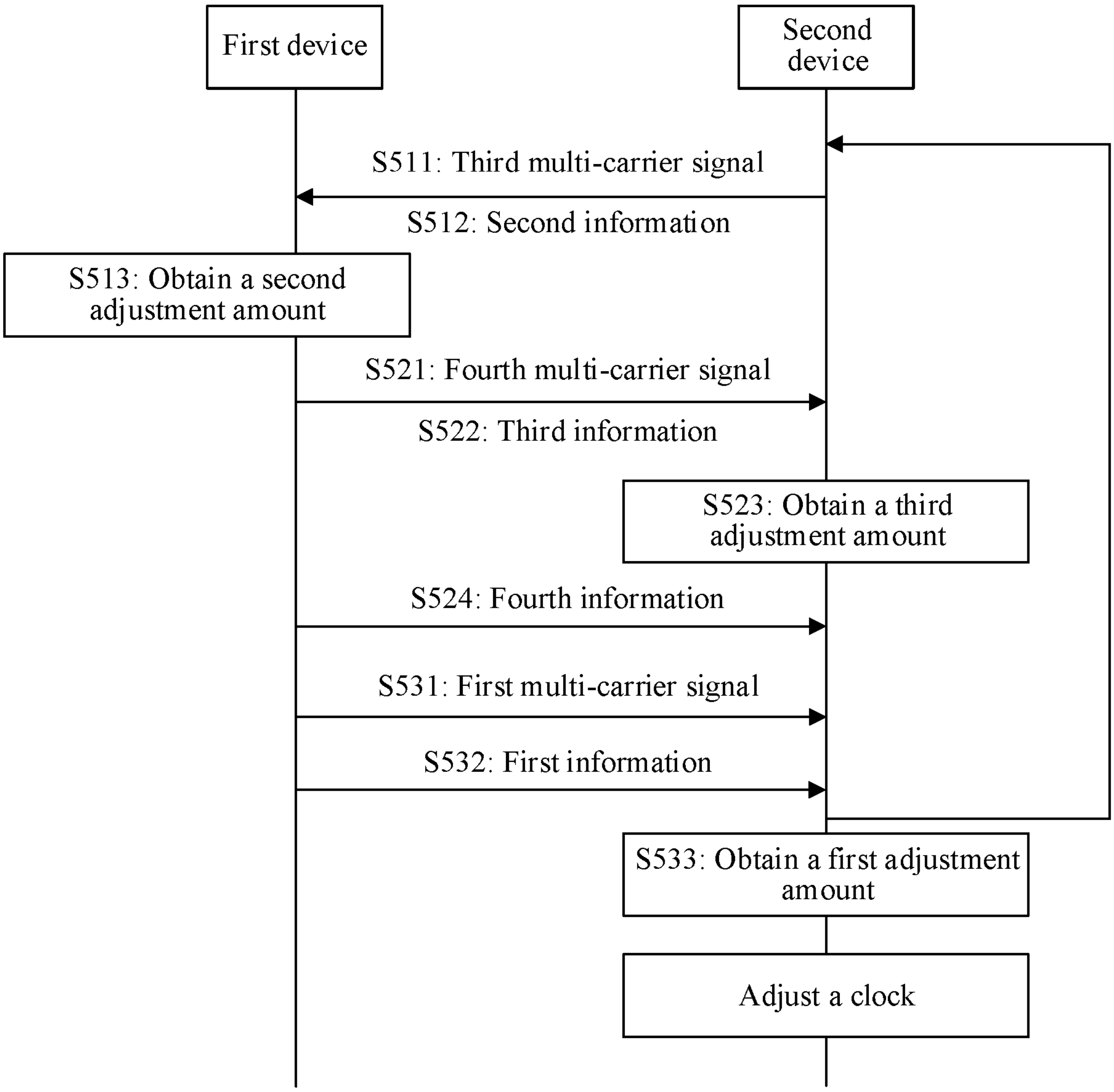
First device
Second device
S511: Third multi-carrier signal
S512: Second information
S513: Obtain a second adjustment amount
S521: Fourth multi-carrier signal
S522: Third information
S523: Obtain a third adjustment amount
S524: Fourth information
S531: First multi-carrier signal
S532: First information
S533: Obtain a first adjustment amount
Adjust a clock

FIG. 7

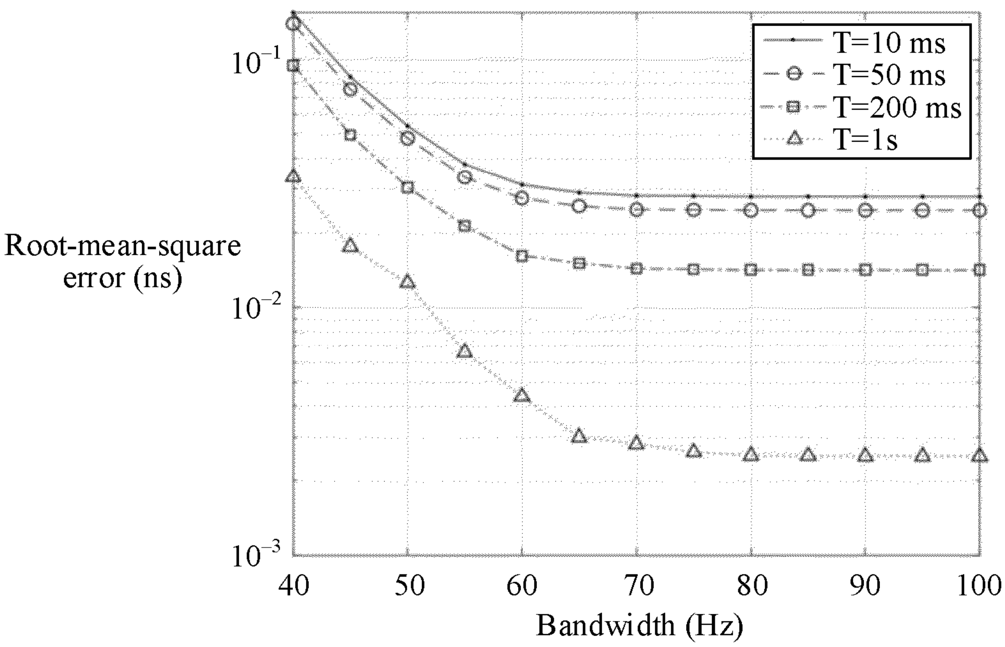


FIG. 8

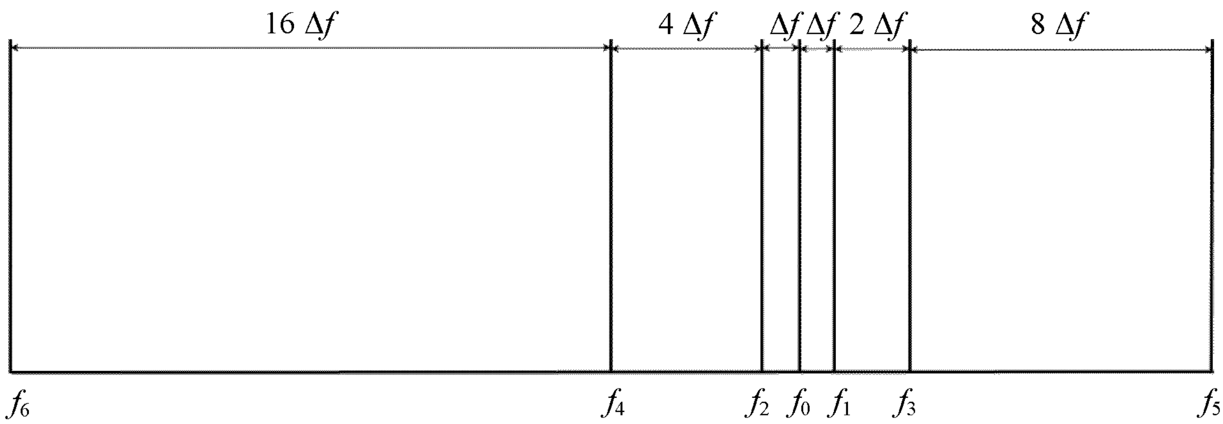


FIG. 9

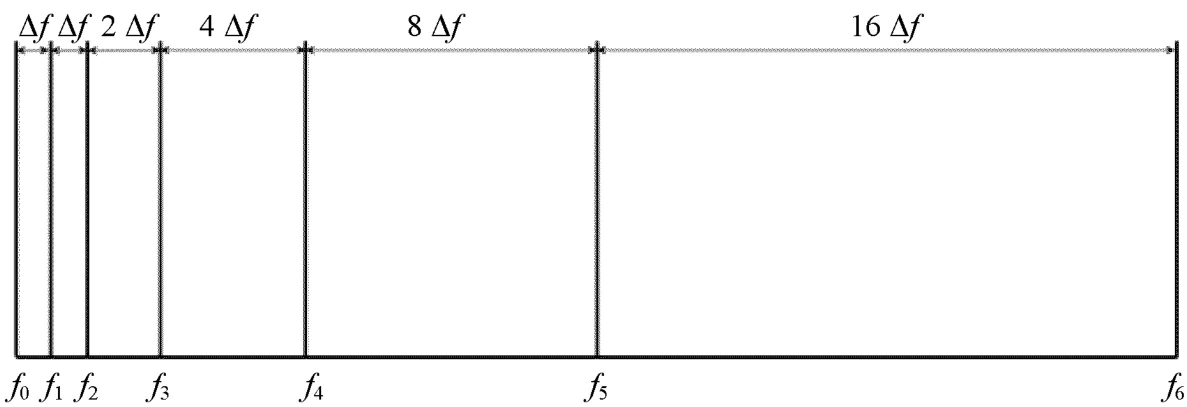


FIG. 10

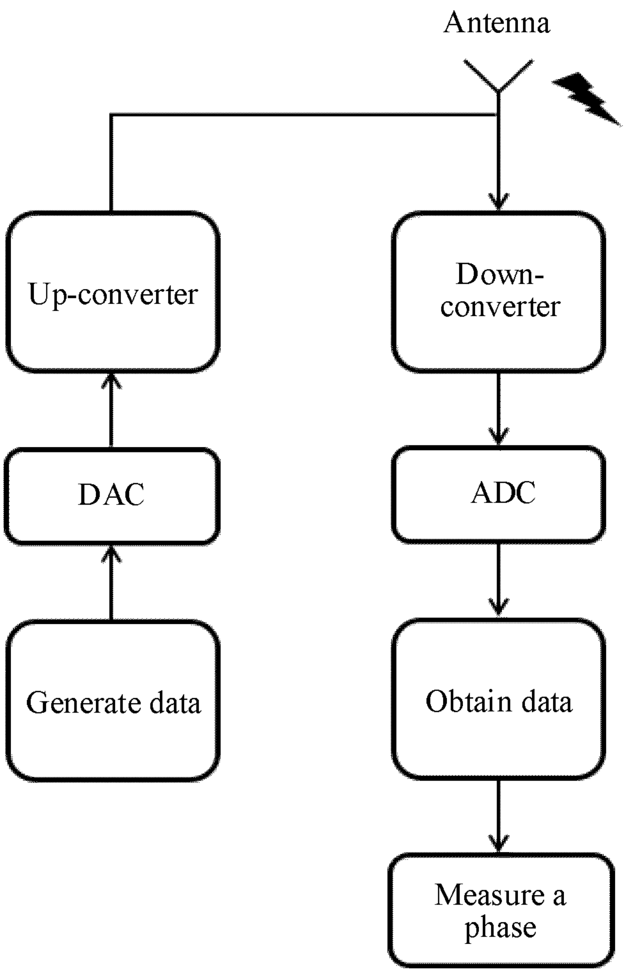
Antenna
Up-converter
Down-converter
DAC
ADC
Generate data
Obtain data
Measure a phase

FIG. 11

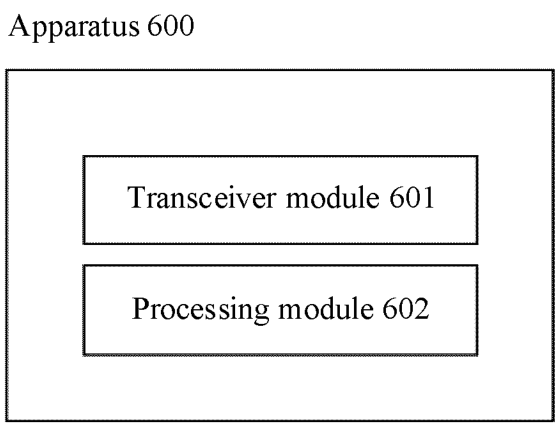
Apparatus 600
Transceiver module 601
Processing module 602

FIG. 12

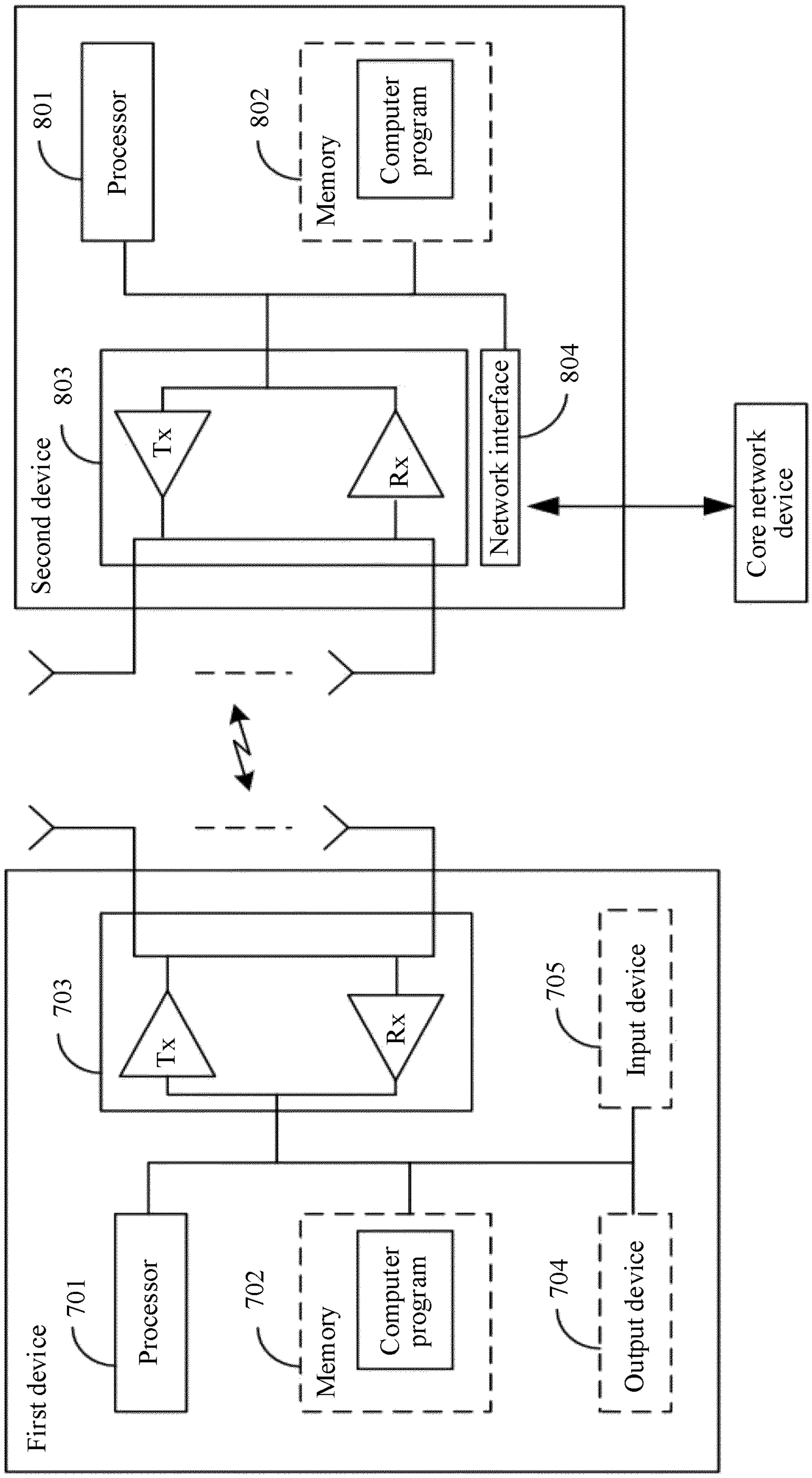
Second device
801
Processor
802
Memory
Computer program
803
Tx
Rx
Network interface
804
Core network device
First device
701
Processor
702
Memory
Computer program
703
Tx
Rx
704
Output device
705
Input device

FIG. 13

**INTERNATIONAL SEARCH REPORT**

International application No.
**PCT/CN2022/132119**

**A. CLASSIFICATION OF SUBJECT MATTER**

H04L7/08(2006.01)i; H04W56/00(2009.01)i; G01S5/02(2010.01)i

According to International Patent Classification (IPC) or to both national classification and IPC

**B. FIELDS SEARCHED**

Minimum documentation searched (classification system followed by classification symbols)

H04L,H04W,G01S

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 多载波, 载波, 干涉, 干涉测量, 频率, 时间, 时钟, 同步, 双向, 相位, 相位 10d 差, multi-carrier+, carrier+, interferometry, freqen+, time+, clock+, synchron+, phase+, difference

**C. DOCUMENTS CONSIDERED TO BE RELEVANT**

| Category* | Citation of document, with indication, where appropriate, of the relevant passages | Relevant to claim No. |
|---|---|---|
| X | WO 2022226233 A1 (ZAINAR INC.) 27 October 2022 (2022-10-27) claims 1-19, and description, paragraphs [0018]-[0027], [0075]-[0136], and [0197]-[0199], and description figures 1A-6C | 1-4, 9-13, 16-24 |
| X | US 2022095262 A1 (KONINKLIJKE KPN NV; DELFT UNIVERSITY OF TECHNOLOGY;) 24 March 2022 (2022-03-24) description, paragraphs [0075]-[0102], and figures 1-11 | 1-4, 9-13, 16-24 |
| A | CN 102859927 A (HUAWEI TECHNOLOGIES CO., LTD.) 02 January 2013 (2013-01-02) entire document | 1-24 |
| A | CN 110536405 A (HUAWEI TECHNOLOGIES CO., LTD.) 03 December 2019 (2019-12-03) entire document | 1-24 |
| A | CN 111727377 A (KONINKLIJKE PHILIPS N.V.) 29 September 2020 (2020-09-29) entire document | 1-24 |
| A | CN 113765613 A (QILU AEROSPACE INFORMATION RESEARCH INSTITUTE) 07 December 2021 (2021-12-07) entire document | 1-24 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 June 2023** | **15 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2022/132119**

**C. DOCUMENTS CONSIDERED TO BE RELEVANT**

| Category* | Citation of document, with indication, where appropriate, of the relevant passages | Relevant to claim No. |
|---|---|---|
| A | EP 1643707 A1 (ROBERT BOSCH GMBH) 05 April 2006 (2006-04-05)<br>entire document | 1-24 |
| A | US 2022030540 A1 (ZAINAR INC.) 27 January 2022 (2022-01-27)<br>entire document | 1-24 |
| A | US 2022128677 A1 (ZAINAR INC.) 28 April 2022 (2022-04-28)<br>entire document | 1-24 |

Form PCT/ISA/210 (second sheet) (July 2022)

**INTERNATIONAL SEARCH REPORT**
**Information on patent family members**

International application No.
**PCT/CN2022/132119**

| Patent document cited in search report | Publication date (day/month/year) | Patent family member(s) | Publication date (day/month/year) |
|---|---|---|---|
| WO 2022226233 A1 | 27 October 2022 | None | |
| US 2022095262 A1 | 24 March 2022 | WO 2020178459 A1 | 10 September 2020 |
| CN 102859927 A | 02 January 2013 | WO 2012126420 A2 | 27 September 2012 |
| | | WO 2012126420 A3 | 18 April 2013 |
| | | WO 2012126420 A2 | 27 September 2012 |
| | | WO 2012126420 A3 | 18 April 2013 |
| | | CN 102859927 B | 11 March 2015 |
| CN 110536405 A | 03 December 2019 | JP 2021500821 A | 07 January 2021 |
| | | JP 6984014 B2 | 17 December 2021 |
| | | KR 20200055047 A | 20 May 2020 |
| | | KR 102351197 B1 | 13 January 2022 |
| | | EP 3675389 A1 | 01 July 2020 |
| | | EP 3675389 A4 | 26 August 2020 |
| | | WO 2019223462 A1 | 28 November 2019 |
| CN 111727377 A | 29 September 2020 | IN 202047038333 A | 25 September 2020 |
| | | JP 2021514580 A | 10 June 2021 |
| | | JP 7221977 B2 | 14 February 2023 |
| | | US 2020408862 A1 | 31 December 2020 |
| | | US 11320501 B2 | 03 May 2022 |
| | | EP 3752846 A1 | 23 December 2020 |
| | | WO 2019158357 A1 | 22 August 2019 |
| CN 113765613 A | 07 December 2021 | None | |
| EP 1643707 A1 | 05 April 2006 | DE 502005005597 D1 | 20 November 2008 |
| | | EP 1643707 B1 | 08 October 2008 |
| | | DE 102004047600 A1 | 13 April 2006 |
| US 2022030540 A1 | 27 January 2022 | US 2022369072 A1 | 17 November 2022 |
| | | US 11425536 B2 | 23 August 2022 |
| | | EP 4182904 A1 | 24 May 2023 |
| | | US 2022030391 A1 | 27 January 2022 |
| | | US 11445333 B2 | 13 September 2022 |
| | | WO 2022016161 A1 | 20 January 2022 |
| | | US 2023014896 A1 | 19 January 2023 |
| US 2022128677 A1 | 28 April 2022 | US 11493619 B2 | 08 November 2022 |
| | | US 2023077523 A1 | 16 March 2023 |
| | | WO 2022093858 A1 | 05 May 2022 |

Form PCT/ISA/210 (patent family annex) (July 2022)